# EUROPÄISCHE PATENTSCHRIFT

(11) **EP 4 154 697 B1**
(45) Veröffentlichungstag und Bekanntmachung des Hinweises auf die Patenterteilung: **19.03.2025**
(21) Anmeldenummer: 22183995.4
(22) Anmeldetag: 11.07.2022
(51) Int. Cl.: A01D 41/127, A01D 41/14

(54) **FAHRERASSISTENZSYSTEM EINER ERNTEMASCHINE MIT BANDSCHNEIDWERK**
DRIVER ASSISTANCE SYSTEM FOR A HARVESTER WITH A BELT CUTTER
SYSTÈME D'AIDE À LA CONDUITE D'UN ENGIN D'ABATTAGE-FAÇONNAGE POURVU DE MÉCANISME DE COUPE DE BANDE

(30) Priorität: 28.09.2021 DE 102021125117
(43) Veröffentlichungstag der Anmeldung: 29.03.2023
(73) Patentinhaber: CLAAS Selbstfahrende Erntemaschinen GmbH, 33428 Harsewinkel (DE)
(72) Erfinder: Baumgarten, Joachim, 48361 Beelen (DE); Wilken, Andreas, 49143 Bissendorf (DE); Neitemeier, Dennis, 59510 Lippetal (DE); Bormann, Bastian, 33334 Gütersloh (DE); Spiekermann, Sebastian, 48346 Ostbevern (DE); Irmer, Daniel, 33442 Herzebock-Clarholz (DE)
(74) Vertreter: CLAAS Gruppe

(56) Entgegenhaltungen:
- EP-A1- 3 132 711
- EP-A1- 3 549 433
- EP-A2- 2 687 924
- US-B2- 7 630 808

## Beschreibung

Die Erfindung betrifft ein Fahrerassistenzsystem einer landwirtschaftlichen Erntemaschine mit einem als Bandschneidwerk ausgebildeten Erntevorsatz zum Schneiden und Aufnehmen von Erntegut zur Ansteuerung des Bandschneidwerks nach dem Oberbegriff des Anspruchs 1.

Fahrerassistenzsysteme zur teilautomatisierten Ansteuerung von Erntevorsätzen sind aus dem Stand der Technik hinlänglich bekannt. Beispielhaft sei hier auf die EP 3 132 711 A1 verwiesen, in welcher ein Schneidwerkautomat beschrieben wird, der die Arbeitsparameter eines einer landwirtschaftlichen Erntemaschine zugeordneten Schneidwerks in Abhängigkeit von auswählbaren Ernteprozessstrategien optimieren kann. Der hier beschriebene Automat optimiert die Arbeitsparameter konventioneller Getreideschneidwerke und hängt von der Vorauswahl einer bestimmten Prozessstrategie ab. Das in EP 3 132 711 A1 offenbarte Fahrerassistenzsystem eignet sich hervorragend für die Optimierung von Arbeitsparametern konventioneller Schneidwerke in unterschiedlichsten Erntebedingungen. Nachteilig ist, dass dieser Automat an die speziellen Prozessaggregate eines konventionellen Schneidwerks gekoppelt ist und die Optimierung der Arbeitsorgane an Ernteprozessstrategien gebunden ist, wobei die Ernteprozessstrategien von einem Bedienerwunsch abhängen und unter Umständen in den vorherrschenden Erntebedingungen nicht optimal umgesetzt werden können. Das Assistenzsystem kann hier die Optimierung nicht in den optimalsten Bereich lenken, wenn dieser optimalste Bereich von der gewählten Prozessstrategie nicht erfasst wird.

Weiter sind die hier in Rede stehenden Bandschneidwerke ebenfalls hinlänglich aus dem Stand der Technik bekannt, etwa aus EP 2 422 606 B1. Es ist auch gemäß EP 3 286 999 B1 bekannt, die Bandgeschwindigkeiten des Mittenbandes und der diesem seitlich zugehordneten Querförderbänder aufeinander und auf die Fahrgeschwindigkeit der Erntemaschine abgestimmt zu regeln. Nachteilig ist hier, dass die komplexen Zusammenhänge der Vielzahl von Arbeitsparametern eines Bandschneidwerks, welche alle einen Einfluss auf einen optimierten verlustarmen Gutfluss im Bandschneidwerk haben unberücksichtigt bleiben, da nur die Bandgeschwindigkeiten aufeinander abgestimmt werden.

Es ist deshalb Aufgabe der Erfindung die beschriebenen Nachteile des Standes der Technik zu vermeiden und insbesondere ein Fahrerassistenzsystem zu schaffen, welches einen optimierten verlustarmen Transport des Erntegutes durch das Bandschneidwerk in den Schrägförderer der landwirtschaftlichen Erntemaschine ermöglicht und mittels einfacher Rechenverfahren unmittelbar im Erntebetrieb die Aktualisierung von in dem Fahrerassistenzsystem hinterlegten Kennfeldern bewirkt werden kann, ohne dass hierfür spezielle Arbeitspunkte des Kennlinienfeldes gezielt angefahren werden müssen.

Diese Aufgabe wird erfindungsgemäß durch die kennzeichnenden Merkmale des Anspruchs 1 gelöst.

Erfindungsgemäß ist die landwirtschaftliche Erntemaschine mit einem als Bandschneidwerk ausgebildeten Erntevorsatz zum Schneiden und Aufnehmen von Erntegut und mit einem Fahrerassistenzsystem zur Ansteuerung des Bandschneidwerks ausgerüstet ist, wobei das Fahrerassistenzsystem einen Speicher zum Hinterlegen von Daten und eine Rechenvorrichtung zur Verarbeitung der in dem Speicher hinterlegten Daten umfasst und das Bandschneidwerk mindestens ein Mittenband zur Förderung von Erntegut zu einer Querförderschnecke und/oder zu einem Einzugskanal eines Schrägförderers und mindestens ein linksseitig und ein rechtsseitig zu dem Mittenband angeordnetes Querförderband zur Förderung des Erntegutes zum Mittenband umfasst, wobei das Mittenband, das linksseitige und das rechtsseitige Querförderband in Fahrtrichtung hinter einem Messerbalken angeordnet sind und das Bandschneidwerk obenseitig eine Haspel aufnimmt. Das Bandschneidwerk bildet zusammen mit dem Fahrerassistenzsystem einen Bandschneidwerkautomat, indem im Speicher des Fahrerassistenzsystems Kennfelder hinterlegt sind und die Rechenvorrichtung dazu eingerichtet ist mittels der hinterlegten Kennfelder den Bandschneidwerkautomat als Kennfeldsteuerung zu betreiben und der Bandschneidwerkautomat eingerichtet ist, Arbeitsparameter des Bandschneidwerks zu optimieren und die optimierten Arbeitsparameter dem Bandschneidwerk vorzugeben. Indem das eine oder die mehreren dem Bandschneidwerkautomat zugeordneten Kennfelder zumindest den Zusammenhang zwischen einem oder mehreren Arbeitsparametern und Qualitätsparametern beschreiben und dem jeweiligen Kennfeld eine Steuerkennlinie zugeordnet ist und die Steuerkennlinie im Bereich des Minimums des jeweiligen Qualitätsparameters liegt und der Bandschneidwerkautomat mittels der Steuerkennlinie optimierte Arbeitsparameter ermittelt und den jeweils optimierten Arbeitsparameter dem Bandschneidwerk vorgibt, wird sichergestellt, dass das Bandschneidwerk einen optimierten verlustarmen Transport des Erntegutes durch das Bandschneidwerk in den Schrägförderer der landwirtschaftlichen Erntemaschine ermöglicht und mittels einfacher Rechenverfahren unmittelbar im Erntebetrieb die Aktualisierung des Kennfeldes bewirkt werden kann, ohne dass hierfür spezielle Arbeitspunkte gezielt angefahren werden müssen.

In einer vorteilhaften Ausgestaltung der Erfindung bilden das rechtsseitige und das linksseitige Querförderband, das Mittenband, die Einzugswalze, die Haspel und/oder der Messerbalken Prozessaggregate des Bandschneidwerks, wobei der Bandschneidwerkautomat eingerichtet ist die Arbeitsparameter eines oder mehrerer dieser Prozessaggregate zu optimieren und die optimierten Arbeitsparameter dem jeweiligen Prozessaggregat vorzugeben. Dies hat den Effekt, dass der Gutfluss im Bandschneidwerk umfassend optimiert werden kann, da alle wesentlichen Prozessaggregate des Bandschneidwerks von dem Bandschneidwerksautomaten kennfeldbasiert steuerbar sind.

Indem in einer vorteilhaften Ausgestaltung der Erfindung der Bandschneidwerkautomat eingerichtet ist, prozessaggregat-spezifische Teilautomaten in der Weise auszubilden, dass der Bandschneidwerkautomat einen oder mehrere Querförderbandautomaten, einen Mittenbandautomat, einen Haspelautomat, einen Messerbalkenautomat und/oder einen Einzugswalzenautomat ausbildet und die jeweiligen Teilautomaten eingerichtet sind die Arbeitsparameter der Querförderbänder, des Mittenbandes, der Haspel, des Messerbalkens und/oder der Einzugswalze des Bandschneidwerks zu optimieren und die optimierten Arbeitsparameter dem jeweiligen Prozessaggregat des Bandschneidwerks vorzugeben, wird sichergestellt, dass die Gutflussoptimierung im Bandschneidwerk ganz spezifisch, nämlich Prozessaggregat-abhängig beeinflusst werden kann.

In einer vorteilhaften Ausgestaltung der Erfindung sind das eine oder die mehreren dem Bandschneidwerkautomaten zugeordneten Kennfelder so beschaffen, dass sie den Zusammenhang von Arbeitsparametern eines Prozessaggregats und Qualitätsparametern beschreiben. Dies hat insbesondere den Effekt, dass der Einfluss jedes einzelnen Prozessaggregates auf die Gutflussoptimierung im Bandschneidwerk gezielt gesteuert werden kann. In diesem Zusammenhang ist es von Vorteil, wenn jedem Teilautomaten ein oder mehrere Kennfelder zugeordnet sind, wobei das eine oder die mehreren Kennfelder zumindest den Zusammenhang von Arbeitsparametern des dem jeweiligen Teilautomaten zugeordneten Prozessaggregats und Qualitätsparametern beschreiben und dem jeweiligen Kennfeld eine Steuerkennlinie zugeordnet ist und die Steuerkennlinie im Bereich des Minimums des jeweiligen Qualitätsparameters liegt und der Bandschneidwerkautomat mittels der Steuerkennlinie optimierte Arbeitsparameter ermittelt und den jeweils optimierten Arbeitsparameter dem Bandschneidwerk vorgibt . Auf diese Weise wird es möglich, dass jedes Prozessaggregat des Bandschneidwerks ganz spezifisch gesteuert werden kann, da erfahrungsgemäß die einzelnen Prozessaggregate ganz unterschiedlichen Einfluss auf den Gutfluss im Bandschneidwerk haben.

In einer weiteren vorteilhaften Ausgestaltung der Erfindung ist vorgesehen, dass der oder die Qualitätsparameter des einen oder der mehreren Kennfelder ein Schwingungskoeffizient und/oder ein Abscheideverlust sind, wobei der Schwingungskoeffizient ein Indikator für die Schichthöhenschwankungen und damit für einen inhomogenen Gutfluss ist, während der Abscheideverlust ein wesentlicher, die Arbeitsqualität eines Mähdreschers beschreibender Parameter ist, wobei zunehmende Abscheideverluste auch ein Hinweis auf einen nicht optimalen Gutfluss des Erntegutstromes durch den Mähdrescher sind.

Indem der Schwingungskoeffizient eine Schwankung des Erntegutdurchsatzes beschreibt und Mittel vorgesehen sind, die einen Erntegutdurchsatz und den die Schwankung des Erntegutdurchsatzes beschreibenden Schwingungskoeffizient in einem vor den Dreschorganen der landwirtschaftlichen Erntemaschine liegenden Bereich ermitteln, wird in einer vorteilhaften Weiterbildung der Erfindung sichergestellt, dass der einen inhomogenen Gutfluss am eindeutigsten beschreibende Parameter bei der Optimierung des Gutflusses im Bandschneidwerk maßgebend berücksichtigt wird. Indem der Schwingungskoeffizient zudem in einem vor den Dreschorganen liegenden Bereich ermittelt wird kann zudem der die Gutstromstruktur völlig verändernde Einfluss der Dreschorgane ausgeschlossen werden.

In einer vorteilhaften Ausgestaltung der Erfindung umfasst der weitere Qualitätsparameter den Abscheideverlust, da dieser den Kornverlust beschreibt und der Kornverlust ein die Arbeitsqualität der landwirtschaftlichen Erntemaschine maßgeblich bestimmender Parameter ist.

Den wesentlichsten Einfluss auf die Bewegung eines Erntegutstroms durch ein Bandschneidwerk hat der Erntegutdurchsatz, wobei sehr hohe oder sehr niedrige Erntegutdurchsätze häufig Störungen im Gutfluss innerhalb des Bandschneidwerkes oder bei der Übergabe des Erntegutstromes an den Mähdrescher hervorrufen. Daher ist es von besonderem Vorteil, wenn das jeweilige Kennfeld einen den Erntegutdurchsatz repräsentierenden Parameter, vorzugsweise die Schichthöhe, berücksichtigt.

In einer vorteilhaften Weiterbildung der Erfindung beschreibt daher das jeweilige Kennfeld den jeweiligen Arbeitsparameter in Abhängigkeit vom Schwingungskoeffizienten und der den Erntegutdurchsatz repräsentierenden Schichthöhe. In diesem Zusammenhang ist es daher auch von Vorteil, wenn in einer weiteren Ausgestaltungsvariante das jeweilige Kennfeld den oder die zu optimierenden jeweiligen Arbeitsparameter zumindest in Abhängigkeit vom Abscheideverlust beschreibt.

Eine besonders effiziente Anwendung einer kennlinienbasierten Kennfeldsteuerung ergibt sich dann, wenn das jeweilige Kennfeld als Initialkennfeld ausgeführt ist, wobei in dem Initialkennfeld zumindest der Zusammenhang von Arbeitsparametern eines Prozessaggregats und Qualitätsparametern durch Initialarbeitspunkte beschrieben wird, im Erntebetrieb in Abhängigkeit von Messgrößen Momentan-Arbeitspunkte ermittelt werden, die Momentan-Arbeitspunkte in quasistationäre Arbeitspunkte umgerechnet werden und die ermittelten quasistationären Arbeitspunkte die korrespondierenden Arbeitspunkte des jeweiligen Kennfeldes überschreiben, sodass das Initialkennfeld in ein aktualisiertes Kennfeld gewandelt wird. Dies hat insbesondere den Effekt, dass mittels einfacher Rechenverfahren unmittelbar im Erntebetrieb die Aktualisierung des Kennfeldes bewirkt werden kann, ohne dass hierfür spezielle Arbeitspunkte gezielt angefahren werden müssen.

In diesem Zusammenhang ist es von Vorteil, wenn die Messgrößen die Längsschwingung und/oder die Querschwingung eines die landwirtschaftliche Erntemaschine durchlaufenden Erntegutstromes und/oder die Bestandshöhe und/oder den Hydraulikdruck oder Leistungsbedarf eines Haspelantriebsmotors umfassen und wobei die Messgrößen in Qualitätsparameter oder einen Erntegutdurchsatz umgerechnet werden. Ein wirkungsvolles Arbeiten der Kennfeldsteuerung ergibt sich zudem dann, wenn die Messgrößen unmittelbar in die Qualitätsparameter oder einen Erntegutdurchsatz umgerechnet werden.

Um den Einfluss von Messfehlern in Grenzen zu halten, ist in einer vorteilhaften Ausgestaltung der Erfindung vorgesehen, dass der momentane Arbeitspunkt in einen quasistationären Arbeitspunkt übergeht, wenn eine oder mehrere Messgrößen innerhalb eines Zeitintervalls, vorzugsweise innerhalb eines Zeitintervalls von 6 Sekunden annähernd konstant bleiben. In diesem Zusammenhang ist es auch von Vorteil, wenn das Zeitintervall so bemessen ist, dass ein Totzeitintervall in der Messkette kompensiert wird.

Vor dem Hintergrund, dass die Bewegungsgeschwindigkeit des Erntegutstromes durch das Bandschneidwerk maßgeblich von der Bandgeschwindigkeit der rechts- und linksseitigen Querförderbänder und des Mittenbandes bestimmt wird ist in vorteilhafter Weiterbildung der Erfindung vorgesehen, dass der zu optimierende Arbeitsparameter des Prozessaggregats "rechtsseitiges Querförderband" zumindest die Bandgeschwindigkeit des rechtsseitigen Querförderbandes, der zu optimierende Arbeitsparameter des Prozessaggregats "linksseitiges Querförderband" zumindest die Bandgeschwindigkeit des linksseitigen Querförderbandes und der zu optimierende Arbeitsparameter des Prozessaggregats Mittenband zumindest die Bandgeschwindigkeit des Mittenbandes umfasst.

Die einem Bandschneidwerk zugeordnete Haspel ist so beschaffen, dass sie auch eine Förderwirkung auf den Erntegutstrom im Bandschneidwerk ausübt, sodass in einer weiteren vorteilhaften Ausgestaltung der Erfindung vorgesehen ist, dass der zu optimierende Arbeitsparameter des Prozessaggregats Haspel zumindest die Haspelvertikalposition und/oder die Haspelhorizontalposition umfasst.

Der das Bandschneidwerk durchlaufende Erntegutstrom wird in einem Mittenbereich des Bandschneidwerks von einer sogenannten Einzugswalze erfasst und an den Mähdrescher, hier zunächst den Schrägförderschacht übergeben. Damit auch bei der Übergabe des Erntegutstromes vom Bandschneidwerk an den Schrägförderer ein optimaler Gutfluss erhalten bleibt ist in einer weiteren vorteilhaften Ausgestaltung vorgesehen, dass der zu optimierende Arbeitsparameter des Prozessaggregats Einzugswalze zumindest die Einzugswalzenhorizontalposition und/oder die Einzugswalzendrehzahl umfasst.

Ein nicht an die jeweiligen Erntebedingungen und die Fahrgeschwindigkeit der Erntemaschine angepasster, von dem Messerbalken vorgenommener Schnitt des Erntegutes kann bereits beim Eintritt des Erntegutstromes in das Bandschneidwerk zu Gutstauerscheinungen führen, sodass in einer vorteilhaften Ausgestaltung vorgesehen ist, dass der zu optimierende Arbeitsparameter des Prozessaggregats Messerbalken zumindest die Schnittgeschwindigkeit und/oder den Messerhub umfasst.

Eine effiziente Kennfeldsteuerung ergibt sich in einer Ausgestaltung dann, wenn das Kennfeld den Zusammenhang zwischen dem Qualitätsparameter Schwingungskoeffizient, dem den Erntegutdurchsatz repräsentierenden Parameter Schichthöhe und dem Arbeitsparameter "Bandgeschwindigkeit Mittenband" beschreibt und die dem Kennfeld zugeordnete Steuerkennlinie im Bereich des Minimums des Schwingungskoeffizienten liegt.

Eine effiziente Kennfeldsteuerung wird auch dann erreicht, wenn gemäß einer weiteren Ausgestaltung das Kennfeld den Zusammenhang zwischen dem Qualitätsparameter Schwingungskoeffizient, dem den Erntegutdurchsatz repräsentierenden Parameter Schichthöhe und dem Arbeitsparameter "Bandgeschwindigkeit rechtsseitiges und/oder linksseitiges Querförderband" beschreibt und die dem Kennfeld zugeordnete Steuerkennlinie im Bereich des Minimums des Schwingungskoeffizienten liegt.

In diesem Zusammenhang ist es auch von Vorteil, wenn das Kennfeld den Zusammenhang zwischen dem Qualitätsparameter Schwingungskoeffizient, dem den Erntegutdurchsatz repräsentierenden Parameter Schichthöhe und dem Arbeitsparameter Haspelhorizontalposition und/oder Haspelvertikalposition beschreibt und die dem Kennfeld zugeordnete Steuerkennlinie im Bereich des Minimums des Schwingungskoeffizienten liegt.

Vor dem Hintergrund, dass ein nicht optimaler Gutfluss im Bereich des Bandschneidwerkes auch negative Auswirkungen auf den Abscheideverlust hat ist in einer vorteilhaften Ausgestaltung der Erfindung vorgesehen, dass das Kennfeld den Zusammenhang zwischen dem Qualitätsparameter Abscheideverlust und den Arbeitsparametern Geschwindigkeit Mittenband und Geschwindigkeit linksseitiges und/oder rechtsseitiges Querförderband beschreibt und die dem Kennfeld zugeordnete Steuerkennlinie im Bereich des Minimums des Abscheideverlusts liegt. In diesem Zusammenhang ist es auch von Vorteil, wenn das Kennfeld den Zusammenhang zwischen dem Qualitätsparameter Abscheideverlust, dem den Erntegutdurchsatz repräsentierenden Parameter Hydraulikdruck oder Leistungsbedarf eines Haspelantriebsmotors/ Haspelantriebszylinders und dem Arbeitsparameter Haspelhorizontalposition und/oder Haspelvertikalposition beschreibt und die dem Kennfeld zugeordnete Steuerkennlinie im Bereich des Minimums des Abscheideverlusts liegt.

Indem in einer vorteilhaften Ausgestaltung die Anpassung des jeweiligen Kennfeldes in Abhängigkeit vom Schwingungskoeffizienten eine schnelle, eine dynamische Anpassung des jeweiligen Kennfeldes bewirkt während die Anpassung des jeweiligen Kennfeldes in Abhängigkeit vom Abscheideverlust eine langsame, eine träge Anpassung des jeweiligen Kennfeldes bewirkt kann sichergestellt werden, dass der Einfluss sowohl kurzfristiger als auch langfristiger Effekte bei der Optimierung der Arbeitsparameters des Bandschneidwerks berücksichtigt wird.

Ein besonders effektiv arbeitendes Fahrerassistenzsystem wird dann erreicht, wenn in einer vorteilhaften Ausgestaltung der Erfindung das Bandschneidwerk zusammen mit dem Fahrerassistenzsystem einen Bandschneidwerkautomat bildet, der eingerichtet ist als Kennfeldsteuerung betrieben zu werden, indem im Speicher des Fahrerassistenzsystems Kennfelder hinterlegt sind und die Rechenvorrichtung dazu eingerichtet ist mittels der hinterlegten Kennfelder den Bandschneidwerkautomat als Kennfeldsteuerung zu betreiben, wobei die hinterlegten Kennfelder zumindest den Zusammenhang zwischen einem oder mehreren Arbeitsparametern und Qualitätsparametern beschreiben und dem jeweiligen Kennfeld eine Steuerkennlinie zugeordnet ist, wobei die Steuerkennlinien im Bereich des Minimums des jeweiligen Qualitätsparameters liegt und dass das Fahrerassistenzsystem weiter eingerichtet ist
a. Messgrößen des Bandschneidwerks und/oder der landwirtschaftlichen Arbeitsmaschine zu ermitteln
b. zumindest aus den ermittelten Messgrößen Momentan-Arbeitspunkte abzuleiten
c. den Momentan-Arbeitspunkt in einen quasistationären Arbeitspunkt umzurechnen
d. den quasistationären Arbeitspunkt an den jeweiligen Bandschneidwerkautomat oder einen oder mehrere Teilautomaten zu übergeben
e. in dem jeweiligen Bandschneidwerkautomat oder Teilautomat an das dort jeweils hinterlegte Initialkennfeld oder das bereits aktualisierte Kennfeld zu übergeben
f. in dem jeweiligen Kennfeld einen Initialarbeitspunkt oder einen bereits aktualisierten Arbeitspunkt durch einen quasistationären Arbeitspunkt zu ersetzen
g. unter Berücksichtigung der eingefügten quasistationären Arbeitspunkte ein aktualisiertes Kennfeld zu berechnen
h. die Steuerkennlinie des aktualisierten Kennfeldes zu ermittelt
i. mittels der aktualisierten Steuerkennlinie optimierte Arbeitsparameter zu ermitteln
k. den jeweils optimierten Arbeitsparameter dem jeweiligen Prozessaggregat vorzugeben.

Um den Einfluss kurzfristiger und langfristiger Effekte auf die Optimierung eines Arbeitsparameters hinreichend zu berücksichtigen ist in einer weiteren vorteilhaften Ausgestaltung der Erfindung vorgesehen, dass die Adaption des Kennfeldes eine Überlagerung einer dynamischen Kennfeldadaption "Schwingungskoeffizient" und einer trägen Kennfeldadaption "Abscheideverlust" umfasst. In diesem Zusammenhang ist es von Vorteil, wenn die dynamische Kennfeldadaption dadurch bewirkt wird, dass der Qualitätsparameter des jeweiligen Kennfeldes von dem Schwingungskoeffizienten gebildet wird, da dieser sehr präzise und in einem nahe zum Bandschneidwerk gelegenen Bereich Schichthöhenschwankungen erfasst. Indem die träge Kennfeldadaption dadurch bewirkt wird, dass der Qualitätsparameter des jeweiligen Kennfeldes von dem Abscheideverlust gebildet wird, wird sichergestellt, dass auch langfristige Effekte bei der Optimierung der Arbeitsparameter der Prozessaggregate des Bandschneidwerks berücksichtigt werden.

Vor dem Hintergrund, dass ein und derselbe zu optimierende Arbeitsparameter in den hinterlegten Kennfeldern in Abhängigkeit von unterschiedlichen Qualitätsparametern definiert wird ist in einer vorteilhaften Ausgestaltung der Erfindung vorgesehen, dass das Fahrerassistenzsystem in einen Prüfschritt prüft, ob sich für die zu optimierenden Arbeitsparameter bei Anwendung der dynamischen Kennfeldadaption und der trägen Kennfeldadaption gegenläufige Tendenzen für den Wert des jeweils optimierten Arbeitsparameters einstellen. In diesem Zusammenhang ist es von Vorteil, wenn anhand von Randbedingungen entschieden wird, welches Kennfeldoptimum und/oder mittleres Kennfeldoptimum angefahren wird. Die erwähnten Randbedingungen werden in einer vorteilhaften Ausgestaltung in einer Kostenfunktion hinterlegt, welche in einer vorteilhaften Ausgestaltung die Parameter Durchsatz/h, Schwingungskoeffizient, Abscheideverluste, Schneidwerksverluste berücksichtigt, wobei diese Parameter unterschiedlich gewichtet sein können

Die Qualität der Kennfeldsteuerung kann auch dadurch noch gesteigert werden, wenn in einer vorteilhaften Weiterbildung der Erfindung das Fahrerassistenzsystem bei der Generierung der jeweiligen Kennfelder Expertenwissen berücksichtigt.

Das Fahrerassistenzsystem kann vor allem dann sehr wirkungsvoll eingesetzt werden, wenn zumindest der Messerbalken und die ihm nachgeordneten Querförderbänder flexibel ausgebildet sind, da diese optimierte Anpassung der Prozessaggregate an Bodenkonturen eine signifikante Auswirkung auf den Gutfluss im Bandschneidwerk haben, da sich dessen Bodenbereich sowohl in Längs- als auch Querrichtung ständig ändern kann.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: einen nur teilweise dargestellten Mähdrescher mit Bandschneidwerk
- Figur 2: eine Detailansicht des Bandschneidwerks nach Figur 1
- Figur 3: eine schematische Darstellung des erfindungsgemäßen Fahrerassistenzsystems
- Figur 4: eine erste Detaildarstellung der erfindungsgemäßen Kennfelder
- Figur 5: eine zweite Detaildarstellung der erfindungsgemäßen Kennfelder
- Figur 6: eine Detaildarstellung der erfindungsgemäßen Kennfeldadaption
- Figur 6a: Detailerläuterungen zu Figur 6
- Figur 7: eine schematische Darstellung der Arbeitsweise des erfindungsgemäßen Fahrerassistenzsystems

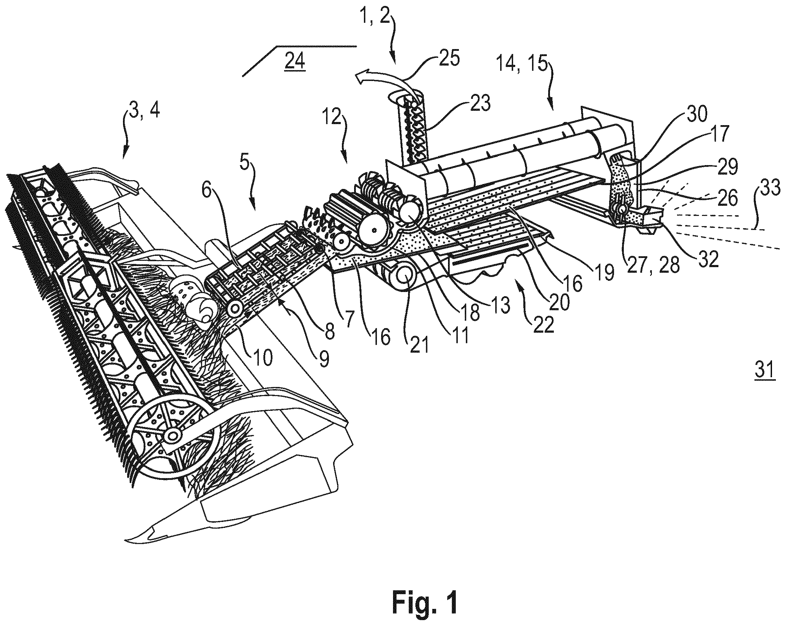

Die in Fig. 1 schematisch dargestellte, als Mähdrescher 2 ausgeführte landwirtschaftliche Arbeitsmaschine 1 nimmt in ihrem frontseitigen Bereich einen als Bandschneidwerk 4 ausgeführten Erntevorsatz 3 auf, welcher in an sich bekannter Weise mit dem Schrägförderer 5 des Mähdreschers 2 verbunden ist. Die Förderorgane 6 des Schrägförderers 5 werden obenseitig um eine Schwenkachse 7 quer zur Längsrichtung des Mähdreschers 2 schwenkbeweglich geführt. Im dargestellten Ausführungsbeispiel sind den Förderorganen 6 in einem mittigen Bereich eine sogenannte an sich bekannte, später aber noch näher erläuterte Schichthöhenwalze 8 zugeordnet, deren Auslenkung in vertikaler Richtung ein Maß für die Schichthöhe 9 des den Schrägförderer 5 durchlaufenden Erntegutstroms 10 ist. Der den Schrägförderer 5 durchlaufende Erntegutstrom 10 wird in dem obenseitigen, rückwärtigen Bereich des Schrägförderers 5 an die untenseitig zumindest teilweise von einem sogenannten Dreschkorb 11 ummantelten Dreschorgane 12 des Mähdreschers 2 übergeben. Eine den Dreschorganen 12 nachgeordnete Umlenktrommel 13 lenkt den im rückwärtigen Bereich der Dreschorgane 12 aus diesen austretenden Gutstrom 10 so um, dass er unmittelbar an eine als Abscheiderotoranordnung 14 ausgeführte Trenneinrichtung 15 übergeben wird. Es liegt im Rahmen der Erfindung, dass die Trenneinrichtung 15 auch als an sich bekannter und deshalb nicht dargestellter Hordenschüttler ausgeführt sein kann. Auch liegt es im Rahmen der Erfindung, dass die Trenneinrichtung nur einrotorig ausgeführt ist oder die Dreschorgane 12 und die Trenneinrichtung 15 zu einer ein- oder zweirotorigen Axialflussdresch- und Trenneirichtung zusammengefasst sind.

In der Trenneinrichtung 15 wird der Gutstrom 10 so gefördert, dass in dem Gutstrom 10 enthaltene freibewegliche Körner 16 im untenseitigen Bereich der Trenneinrichtung 15 abgeschieden werden. Sowohl die am Dreschkorb 11 als auch in der Trenneinrichtung 15 abgeschiedenen Körner 16 werden über Rücklaufboden 17 und Zuführboden 18 einer aus mehreren Siebebenen 19, 20 und einem Gebläse 21 bestehenden Reinigungseinrichtung 22 zugeführt. Der gereinigte Körnerstrom 25 wird schließlich mittels Elevatoren 23 an einen Korntank 24 übergeben.

Im rückwärtigen Bereich der Trenneinrichtung 15 ist dieser eine von einem trichterförmigen Gehäuse 26 ummantelte, als Strohhäcksler 27 ausgeführte Zerkleinerungseinrichtung 28 zugeordnet. Dem Strohhäcksler 27 wird obenseitig das die Trenneinrichtung 15 im rückwärtigen Bereich verlassende Stroh 30 zugeführt. Mittels einer verschwenkbaren Strohleitklappe 29 kann das Stroh 30 auch so umgelenkt werden, dass es direkt auf dem Boden 31 in einem Schwad abgelegt wird.

Im Austrittsbereich des Strohhäckslers 27 werden der aus dem zerkleinerten Stroh 30 bestehende Gutstrom und die in der Reinigungseinrichtung 22 abgeschiedenen Nichtkornbestandteile an eine Gutverteileinrichtung 32 übergeben, welche den Restmaterialstrom 33 so abgibt, dass es zu einer Breitverteilung des Restmaterialstroms 33 auf dem Boden 31 kommt.

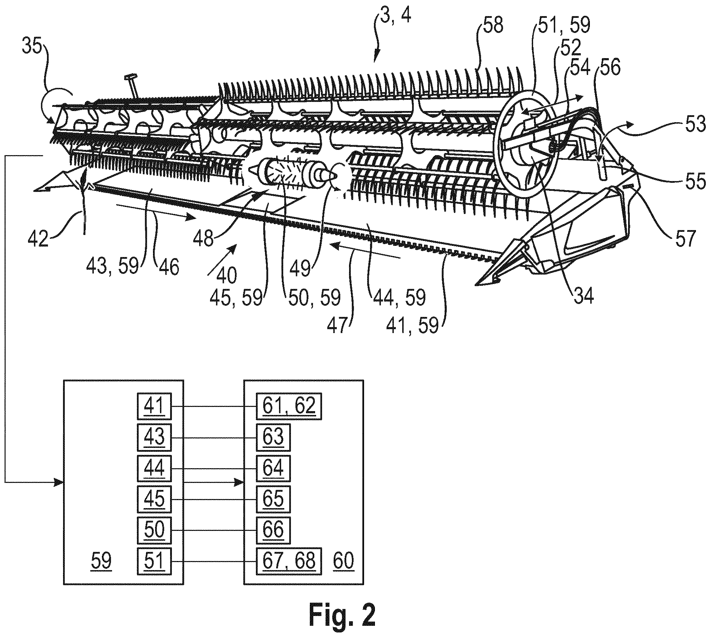

Figur 2 zeigt die erfindungswesentlichen Details des als Bandschneidwerk 4 ausgeführten Erntevorsatzes 3. Im Erntegut-eingangseitigen Bereich 40 nimmt das Bandschneidwerk 4 einen entweder starr oder flexibel ausgeführten Messerbalken 41 auf, der den zu erntenden Pflanzenbestand 42 abtrennt. Ein flexibel ausgeführter Messerbalken 41 kann dabei in bekannter Weise Bodenkonturänderungen in Längs- und Querrichtung besser folgen. Dem Messerbalken 41 sind im dargestellten Ausführungsbeispiel in Pfeilrichtung 40 gesehen ein linksseitiges Querförderband 43, ein rechtsseitiges Querförderband 44 und ein Mittenband 45 zugeordnet. Das linksseitige Querförderband 43 fördert den von ihm erfassten abgeernteten Pflanzenbestand 42 gemäß Pfeilrichtung 46 in Richtung des Mittenbandes 45 und übergibt ihn an dieses. In analoger Weise fördert das rechtsseitige Querförderband 44 den von ihm erfassten, abgeernteten Pflanzenbestand 42 gemäß Pfeilrichtung 47 ebenfalls in Richtung des Mittenbandes 45 und übergibt ihn an dieses. Das Mittenband 45 fördert sodann den von ihm erfassten und von den Querförderbändern 43, 44 an das Mittenband 45 übergebenen Pflanzbestand 42 in den rückwärtigen Bereich des Bandschneidwerks 4 gemäß Pfeilrichtung 48. In diesem rückwärtigen Bereich wird der Pflanzenbestand 42 von einer diesem Bereich zugeordneten gemäß Pfeilrichtung 49 rotierenden Einzugswalze 50 erfasst und als der bereits erwähnte Erntegutstrom 10 an den Schrägförderer 5 übergeben. Obenseitig nimmt das Bandschneidwerk 4 eine ein- oder mehrteilig ausgeführte Haspel 51 auf. Die Position der Haspel 51 kann in an sich bekannter Weise horizontal gemäß Pfeilrichtung 52 und vertikal gemäß Pfeilrichtung 53 angepasst werden, im einfachsten Fall sind für die Umsetzung dieser Bewegungen 52, 53 Hubzylinder 54, 55 am Haspeltragarm 56 und am Rahmen 57 des Bandschneidwerks 4 positioniert. Die Hubzylinder 54, 55 sind jeweils an beiden Seiten des Bandschneidwerks 4 angeordnet. Zudem ist die Position der Mitnahmezinken 58 der Haspel 51 in an sich bekannter und daher nicht näher erläuterten Weise einstellbar. Zudem ist der Haspel 51 zumindest einseitig ein Haspelantriebsmotor 34 zugeordnet, der die Haspel 51 gemäß Pfeilrichtung 35 in eine Drehbewegung versetzt. Erfindungsgemäß bilden der Messerbalken 41, das linksseitige und das rechtseitige Querförderband 43, 44, das Mittenband 45, die Einzugswalze 50 und die Haspel 51 die jeweiligen Prozessaggregate 59 des Bandschneidwerks 4. Jedem dieser Prozessaggregate 59 sind Arbeitsparameter 60 zugeordnet, wobei der Arbeitsparameter des Messerbalkens 41 die Schnittgeschwindigkeit 61 und/oder der Messerhub 62, der Arbeitsparameter des linksseitigen Querförderbandes 43, des rechtsseitigen Querförderbandes 44 sowie des Mittenbandes 45 die jeweilige Bandgeschwindigkeit 63 - 65, der Arbeitsparameter der Einzugswalze 50 die Einzugswalzenhorizontalposition 66und/oder die Einzugswalzendrehzahl 49 und der Arbeitsparameter der Haspel 51 die Haspelvertikalposition 67 und/oder die Haspelhorizontalposition 68 ist.

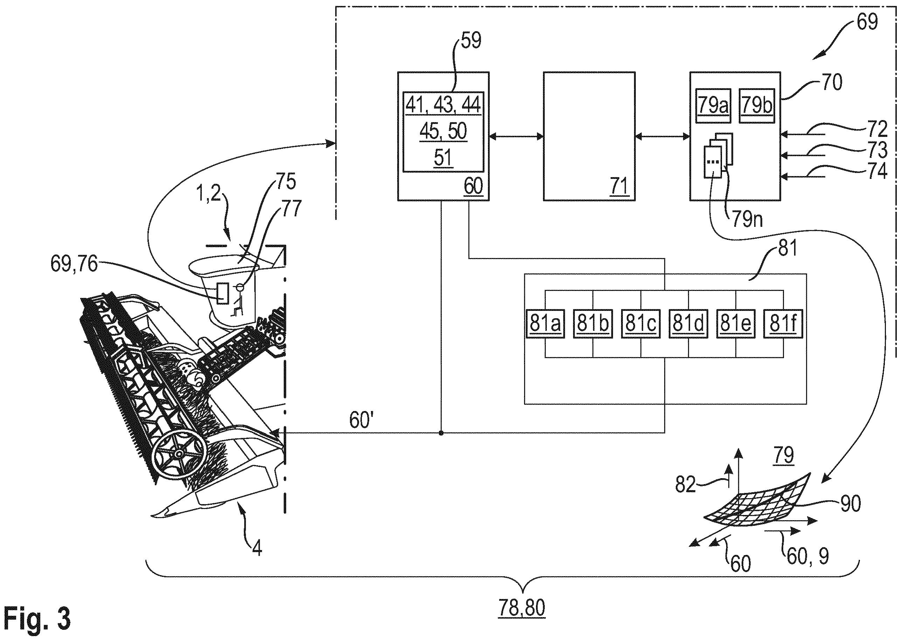

Gemäß Figur 3 weist die vorschlagsgemäße landwirtschaftliche Arbeitsmaschine 1 ein Fahrerassistenzsystem 69 zur Ansteuerung des Bandschneidwerks 4 auf. Das Fahrerassistenzsystem 69 umfasst einen Speicher 70 zum Hinterlegen von noch näher zu erläuternden Daten und eine Rechenvorrichtung 71 zur Verarbeitung der in dem Speicher 70 hinterlegten Daten. Die in dem Speicher 70 hinterlegten Daten können zunächst von maschineninternen Sensorsystemen generierte Informationen 72, von extern Systemen generierte Information 73 und unmittelbar in der Recheneinrichtung hinterlegte Informationen 74 umfassen. Das Fahrerassistenzsystem 69 kann über eine in der Kabine 75 des Mähdreschers 2 angeordneten Bedien- und Anzeigeneinheit 76 betrieben werden. Grundsätzlich ist das Fahrerassistenzsystem 69 dazu eingerichtet, einen Fahrer 77 des Mähdreschers 2 bei der Bedienung des Mähdreschers 2 zu unterstützen.

Wesentlich ist nun, dass das Bandschneidwerk 4 zusammen mit dem Fahrerassistenzsystem 69 einen Bandschneidwerkautomaten 78 bildet. Dies ist vorschlagsgemäß dadurch realisiert, dass im Speicher 70 des Fahrerassistenzsystems 69 noch detailliert zu beschreibende Kennfelder 79 hinterlegt sind und die Rechenvorrichtung 71 dazu eingerichtet ist mittels der hinterlegten Kennfelder 79 den Bandschneidwerkautomat 78 als Kennfeldsteuerung 80 zu betreiben und der Bandschneidwerkautomat 78 eingerichtet ist, Arbeitsparameter 60 des Bandschneidwerks 4 zu optimieren und die optimierten Arbeitsparameter 60' dem Bandschneidwerk 4 vorzugeben, wobei das eine oder die mehreren dem Bandschneidwerkautomat (78) zugeordneten Kennfelder (79) zumindest den Zusammenhang zwischen einem oder mehreren Arbeitsparametern (60) und Qualitätsparametern (82) beschreiben und dem jeweiligen Kennfeld (79) eine Steuerkennlinie (90) zugeordnet ist und die Steuerkennlinie (90) im Bereich des Minimums des jeweiligen Qualitätsparameters (82) liegt und der Bandschneidwerkautomat (78) mittels der Steuerkennlinie (90) optimierte Arbeitsparameter (60') ermittelt und den jeweils optimierten Arbeitsparameter (60') dem Bandschneidwerk (4) vorgibt. Gemäß den vorherigen Ausführungen sind die Arbeitsparameter 60 Prozessaggregaten 59 des Bandschneidwerks 4 zugeordnet und die Prozessaggregate 59 im Wesentlichen das rechtsseitige und das linksseitige Querförderband 43, 44, das Mittenband 45, die Einzugswalze 50, die Haspel 51 und/oder den Messerbalken 41 umfassen. Auf diese Weise ist der Bandschneidwerkautomat 78 eingerichtet, die Arbeitsparameter 60 eines oder mehrerer dieser Prozessaggregate 59 zu optimieren und die optimierten Arbeitsparameter 60' dem jeweiligen Prozessaggregat 41, 43, 44, 45, 50, 51 vorzugeben.

Zudem kann der Bandschneidwerkautomat 78 so eingerichtet sein, dass er prozessaggregat-spezifische Teilautomaten 81 in der Weise ausbildet, dass der Bandschneidwerkautomat 78 einen oder mehrere Querförderbandautomaten 81a, b, einen Mittenbandautomat 81c, einen Haspelautomat 81d, einen Messerbalkenautomat 81e und/oder einen Einzugswalzenautomat 81f ausbildet und die jeweiligen Teilautomaten 81a..f eingerichtet sind die Arbeitsparameter 59 der Querförderbänder 43, 44, des Mittenbandes 45, der Haspel 51, des Messerbalkens 41 und/oder der Einzugswalze 50 des Bandschneidwerks 4 zu optimieren und die optimierten Arbeitsparameter 60' dem jeweiligen Prozessaggregat 59 des Bandschneidwerks 4 vorzugeben.

Das eine oder die mehreren dem Bandschneidwerkautomaten 78 zugeordneten Kennfelder 79 sind so beschaffen, dass sie den Zusammenhang von einem oder mehreren Arbeitsparametern 60 eines oder mehrerer Prozessaggregate 59 und den noch näher zu erläuternden Qualitätsparametern 82 beschreiben. In Analogie hierzu können auch jedem Teilautomaten 81a...f ein oder mehrere Kennfelder 79 zugeordnet sein, wobei das eine oder die mehreren Kennfelder 79 zumindest den Zusammenhang von einem oder mehreren Arbeitsparametern 60 des dem jeweiligen Teilautomaten 81a..f zugeordneten Prozessaggregats 59 und den noch näher zu erläuternden Qualitätsparametern 82 beschreiben. Das jeweilige dem Bandschneidwerkautomaten 78 oder den Teilautomaten 81 zugeordnete Kennfeld 79 kann zudem einen den Erntegutdurchsatz repräsentierenden Parameter, vorzugsweise die Schichthöhe 9, berücksichtigen.

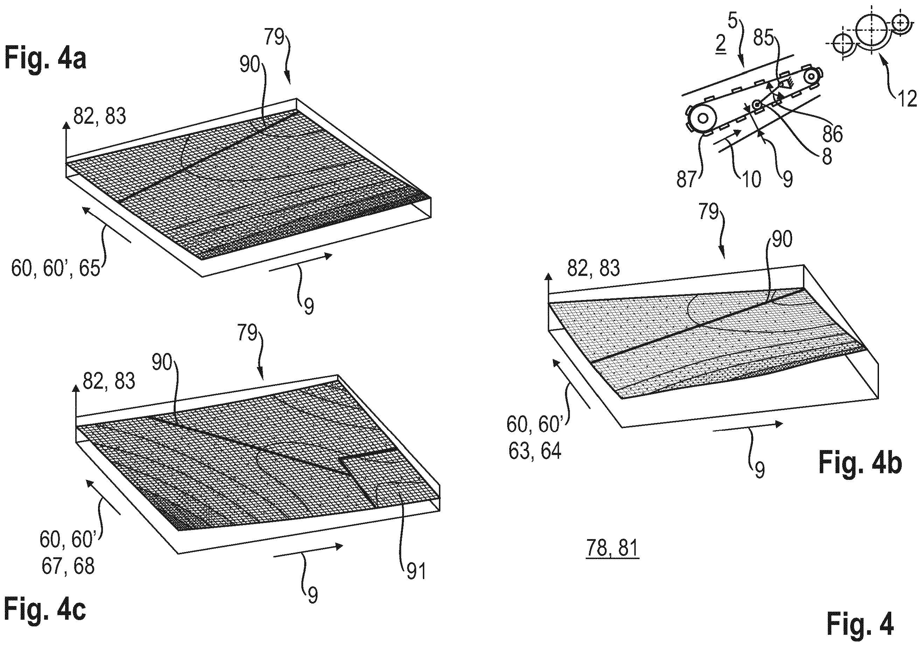

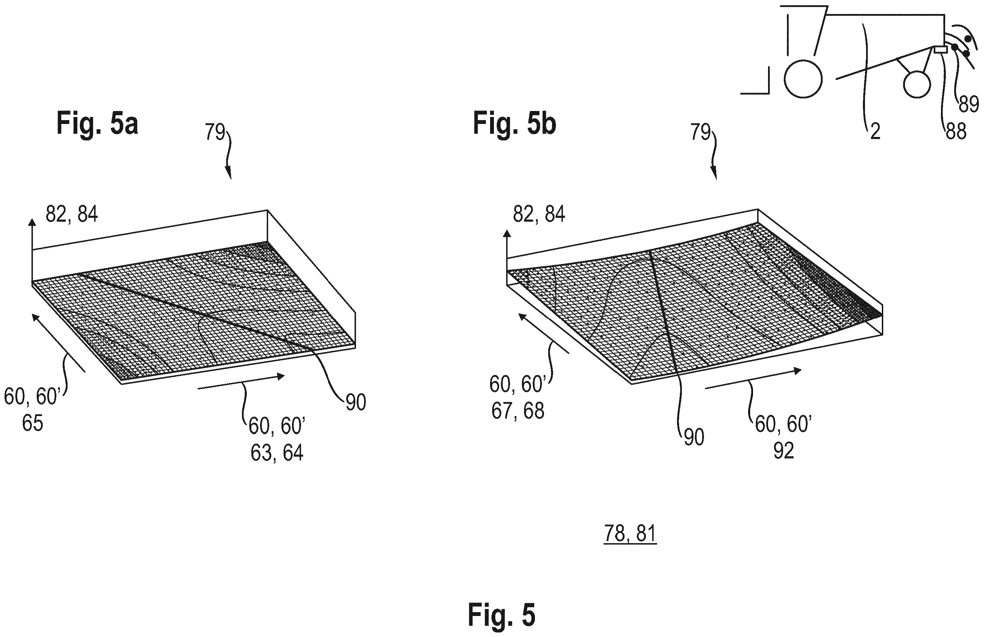

In den Figuren 4 und 5 werden die erfindungsgemäßen Kennfelder 79 in Abhängigkeit von verschiedenen Qualitätsparametern 82 im Detail beschrieben, wobei in Figur 4 der Qualitätsparameter 82 ein noch näher zu erläuternder Schwingungskoeffizient 83 und in Figur 5 der Qualitätsparameter 82 ein ebenfalls noch näher zu erläuternder Abscheideverlust 84 ist. Der aus dem Stand der Technik bekannte Schwingungskoeffizient 83 wird detailliert in EP 3 858 129 A1 beschrieben, deren Offenbarungsgehalt hier durch Bezugnahme vollumfänglich Bestandteil dieser Patentanmeldung wird. Gemäß der Offenbarung der EP 3 858 129 A1 beschreibt der Schwingungskoeffizient 83 eine Schwankung des den Mähdrescher 2 durchlaufenden Erntegutdurchsatzes. Hierfür wird die Schichthöhe 9 des den Mähdrescher 2 im Bereich des Schrägförderers 5 durchlaufenden Erntegutstroms 10 in Abhängigkeit von der Zeit aufgezeichnet. Die ermittelte Schichthöhenschwankung wird sodann gemäß dem in EP 3 858 129 offenbarten Verfahren in den erfindungsgemäßen Schwingungskoeffizienten 83 umgerechnet. Die Schichthöhe 9 wird in einem vor den Dreschorganen 12 liegenden Bereich ermittelt, da der Gutstrom 10 im Bereich der Dreschorgane 12 derart intensiv bearbeitet wird, dass Schichthöhenschwankungen im Erntegutstrom 10 nach Verlassen der Dreschorgane 12 keinen hinreichenden Bezug mehr zum Erntegutdurchsatz haben. Die Schichthöhe 9 wird mittels der bereist erwähnten Schichthöhenwalze 8 im Bereich des Schrägförderers 5 ermittelt, wobei die Schichthöhenwalze 8 um eine Schwenkachse 85 schwenkbeweglich geführt wird und die Auslenkung 86 der Schichthöhenwalze 8 als Maß für die Ermittlung der Schichthöhe 9 herangezogen wird. In an sich bekannter Weise ist die Schichthöhenwalze 8 so oberhalb der die Gutmitnahme bewirkenden Schrägförderleisten 87 positioniert, das deren schichthöhenabhängige Bewegung auf die Schichthöhenwalze 8 übertragen wird und die Auslenkung 86 der Schichthöhenwalze 8 bewirkt.

Der weitere Qualitätsparameter 82, gemäß Figur 5 der Abscheideverlust 84, beschreibt den Kornverlust 89, nämlich die aus dem Mähdrescher 2 in dessen rückwärtigen Bereich austretenden Verlustkörner. In der Regel wird der Kornverlust 89 im rückwärtigen Bereich des Mähdreschers 2 in an sich bekannter Weise mittels geeigneter und hinlänglich bekannter Kornverlustsensoren 88, in der Regel sogenannte Klopfsensoren, ermittelt.

Die in dem Bandschneidwerkautomaten 78 und/oder den Teilautomaten 81 hinterlegten Kennfelder 79 können je nachdem, welche Art der Optimierung umgesetzt werden soll ganz unterschiedlich strukturiert sein. Gemäß Figur 4 kann das jeweilige Kennfeld 79 den jeweiligen Arbeitsparameter 60 in Abhängigkeit vom Schwingungskoeffizienten 83 und den Erntegutdurchsatz durch die den Erntegutdurchsatz repräsentierende Schichthöhe 9 beschreiben. Gemäß Figur 5 kann das jeweilige Kennfeld 79 den oder die jeweiligen Arbeitsparameter 60 zumindest in Abhängigkeit vom Abscheideverlust 84 beschreiben.

Damit das jeweilige Kennfeld 79 die beschriebene Kennfeldsteuerung 80 ermöglicht, in deren Ergebnis der Bandschneidwerkautomat 78 und/oder die Teilautomaten 81 optimierte Arbeitsparameter 60' generieren, ist jedem Kennfeld 79 erfindungsgemäß die bereits erwähnte Steuerkennlinie 90 zugeordnet, die sich in dem jeweiligen Kennfeldes 79 entlang des Minimums des jeweiligen Schwingungskoeffizienten 83 oder des Abscheideverlusts 84 erstreckt und den jeweils optimalen Arbeitsparameters 60' beschreibt.

In einer Ausgestaltung nach Figur 4a beschreibt das Kennfeld 79 den Zusammenhang zwischen dem Qualitätsparameter Schwingungskoeffizient 83, dem den Erntegutdurchsatz repräsentierenden Parameter Schichthöhe 9 und dem Arbeitsparameter 60 "Bandgeschwindigkeit Mittenband" 65, wobei die dem Kennfeld 79 zugeordnete Steuerkennlinie 90 im Bereich des Minimums des Schwingungskoeffizienten 83 liegt. Tendenziell kann man erkennen, dass die Kennfeldsteuerung 80 hier so beschaffen ist, dass größere Schichthöhen 9 höhere Bandgeschwindigkeiten 65 benötigen, während zu hohe oder zu niedrige Bandgeschwindigkeiten 65 den Schwingungskoeffizienten 83 und damit einen optimierten Arbeitsparameter 60' tendenziell eher negativ beeinflussen.

In einer Ausgestaltung nach Figur 4b beschreibt das Kennfeld 79 den Zusammenhang zwischen dem Qualitätsparameter Schwingungskoeffizient 83, dem den Erntegutdurchsatz repräsentierenden Parameter Schichthöhe 9 und dem Arbeitsparameter 60 "Bandgeschwindigkeit rechtsseitiges und/oder linksseitiges Querförderband" 63, 64, wobei die dem Kennfeld 79 zugeordnete Steuerkennlinie 90 im Bereich des Minimums des Schwingungskoeffizienten 83 liegt. Tendenziell kann man erkennen, dass die Kennfeldsteuerung 80 hier ähnlich der nach Figur 4a beschaffen ist, wobei die jeweiligen Einflüsse, dass größere Schichthöhen 9 höhere Bandgeschwindigkeiten 63, 64 benötigen, während zu hohe oder zu niedrige Bandgeschwindigkeiten 63, 64 den Schwingungskoeffizienten 83 und damit einen optimierten Arbeitsparameter 60' tendenziell eher negativ beeinflussen, intensiver ausgeprägt sind.

In einer Ausgestaltung nach Figur 4c beschreibt das Kennfeld 79 den Zusammenhang zwischen dem Qualitätsparameter Schwingungskoeffizient 83, dem den Erntegutdurchsatz repräsentierenden Parameter Schichthöhe 9 und dem Arbeitsparameter 60 "Haspelhorizontalposition und/oder Haspelvertikalposition" 67, 68, wobei die dem Kennfeld 79 zugeordnete Steuerkennlinie 90 im Bereich des Minimums des Schwingungskoeffizienten 83 liegt. Man kann erkennen, dass die Kennfeldsteuerung 80 hier keiner ausgeprägten Tendenz folgt, sondern sehr spezifisch von den ins Verhältnis gesetzten Parametern abhängen. Aufgrund dessen, dass eine Positionsänderung 67, 68 der Haspel 51 sehr komplexen Zusammenhängen folgt, erstreckt sich hier die Steuerkennlinie 90 nicht durch alle Bereiche des Kennfeldes 79, sondern in speziellen Randbereichen 90 wird die Steuerkennlinie 90 durch Expertenwissen 91 ersetzt.

In einer Ausgestaltung nach Figur 5a beschreibt das Kennfeld 79 den Zusammenhang zwischen dem Qualitätsparameter Abscheideverlust 84 und den Arbeitsparametern 60 "Bandgeschwindigkeit Mittenband" 65 und "Bandgeschwindigkeit linksseitiges und/oder rechtsseitiges Querförderband" 63, 64, wobei die dem Kennfeld 79 zugeordnete Steuerkennlinie 90 im Bereich des Minimums des Abscheideverlusts 84 liegt. Tendenziell zeigt sich, dass der Einfluss der Bandgeschwindigkeiten 63-65 auf den Abscheideverlust 84 moderat ausfällt und im Wesentlichen alle Bandgeschwindigkeiten 63-65 die gleiche Tendenz aufweisen, nämlich steigt oder sinkt die Bandgeschwindigkeit 63, 64 der linksseitiges und/oder rechtsseitiges Querförderbänder 43, 44 steigt oder sinkt auch die optimierte Bandgeschwindigkeit 65 des Mittenbandes 45 und umgekehrt.

In einer Ausgestaltung nach Figur 5b beschreibt das Kennfeld 79 den Zusammenhang zwischen dem Qualitätsparameter Abscheideverlust 84, dem den Erntegutdurchsatz repräsentierenden Parameter "Hydraulikdruck oder Leistungsbedarf eines Haspelantriebsmotors/ Haspelantriebszylinders" 92 und dem Arbeitsparameter 60 "Haspelhorizontalposition und/oder Haspelvertikalposition" 67, 68, wobei die dem Kennfeld 79 zugeordnete Steuerkennlinie 90 im Bereich des Minimums des Abscheideverlusts 84 liegt. Tendenziell ist erkennbar, dass mit zunehmendem Hydraulikdruck 92, d.h. mit zunehmendem Durchsatz oder einem höher gewachsenen Pflanzenbestand 42, eine größere Haspelhöhe 67, 68 zu niedrigeren Abscheideverlusten 84 führt.

Aufgrund dessen, dass der Abscheideverlust 84 erst ermittelt wird, wenn der entsprechende Erntegutstrom 10 den Mähdrescher 2 vollständig durchlaufen hat und der von der detektierten Schichthöhe 9 abhängige Erntegutdurchsatz bereits unmittelbar nach dem Eintritt des Erntegutstromes 10 in den Mähdrescher 2 ermittelt wird, führte die Anpassung des jeweiligen Kennfeldes 79 in Abhängigkeit vom Schwingungskoeffizienten 83 zu einer schnellen Anpassung des jeweiligen Kennfeldes 79, während die Anpassung des jeweiligen Kennfeldes 79 in Abhängigkeit vom Abscheideverlust 84 eine langsamere Anpassung des jeweiligen Kennfeldes 79 bewirkt.

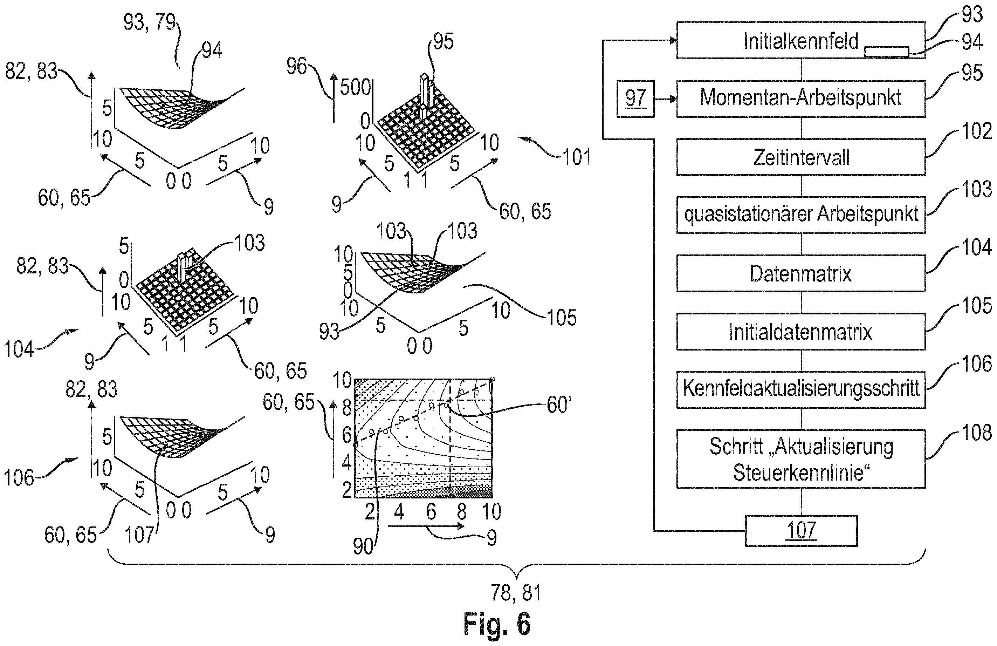

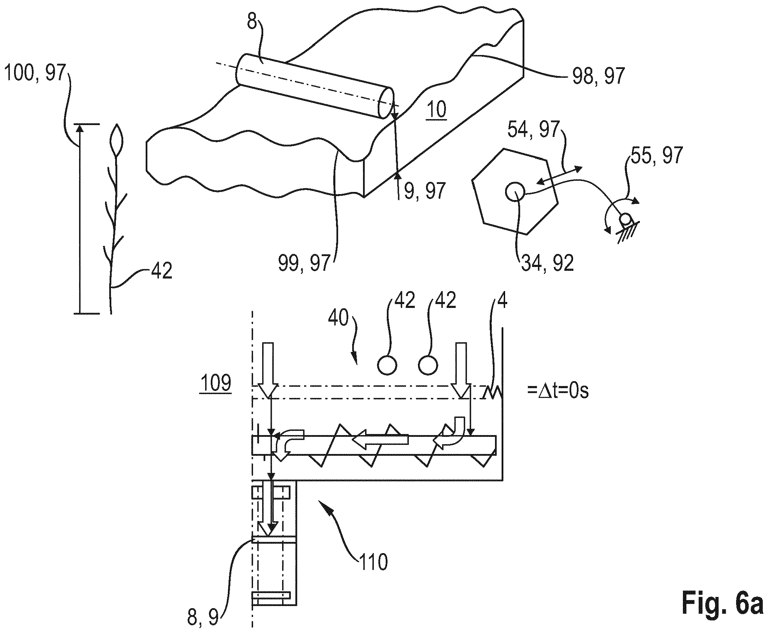

Das Prinzip der Kennfeldgenerierung wird in Figur 6 am Beispiel des Kennfeldes 79 nach Figur 4a beispielhaft beschrieben. Jedes der in den Figuren 4 und 5 beschriebenen Kennfelder 79 wird nach diesem Prinzip erstellt. Das Kennfeld 79 ist in dem Bandschneidwerkautomaten 78 und/oder den Teilautomaten 81 als Initialkennfeld 93 hinterlegt, wobei in dem Initialkennfeld 93 der beschriebene Zusammenhang von Arbeitsparametern 60, hier der Bandgeschwindigkeit 65 des Prozessaggregats 59 Mittenband 45, und Qualitätsparametern 82, hier dem Schwingungskoeffizient 83 und dem erntegutdurchsatz-bezogenen Parameter Schichthöhe 9 durch Initialarbeitspunkte 94 beschrieben wird. Im Erntebetrieb des Mähdreschers 2 werden Momentan-Arbeitspunkte 95 für die Schichthöhe 9 und die Arbeitsparameter 60, hier die Bandgeschwindigkeit 65 des Mittenbandes 45 in Abhängigkeit von der Zeit 96 ermittelt. Zur Ermittlung der Momentan-Arbeitspunkte 95 werden Messgrößen 97 herangezogen, die gemäß Figur 6a vorzugsweise eine Längsschwingung 98 und/oder eine Querschwingung 99 eines die landwirtschaftliche Erntemaschine 1 durchlaufenden Erntegutstromes 10 und/oder eine Bestandshöhe 100 des Pflanzenbestandes 42 und/oder ein Hydraulikdruck 92 oder Leistungsbedarf eines Haspelantriebsmotors 34 sind. Die Messgröße Längsschwingung 98 entspricht dabei der bereits beschriebenen mittels Schichthöhenwalze 8 ermittelten Schichthöhe 9 in Abhängigkeit von der Zeit. Mithin sind die Messgrößen 97 so beschaffen, dass aus ihnen die Qualitätsparameter 82 Schwingungskoeffizient 83 und Abscheideverlust 84 sowie die durchsatzproportionale Schichthöhe 9 abgeleitet werden können.

Die ermittelten Momentan-Arbeitspunkte 95 werden in einer Datenmatrix 101 zwischengespeichert, wobei die Änderung des Wertes des jeweiligen Momentan-Arbeitspunktes 95 innerhalb eines Zeitintervalls 102 ermittelt wird und der Momentan-Arbeitspunkt 95 dann in einen quasistationären Arbeitspunkt 103 überführt wird, wenn sein Wert annährend unverändert, vorzugsweise konstant bleibt. Ein bevorzugtes Zeitintervall 102 kann hier bei sechs Sekunden liegen. Das Zeitintervall 102 soll vorzugsweise zumindest so lang sein, dass es ein Totzeitintervall 109 in der Messkette 110 kompensiert. Beispielsweise erreicht der in dem ernteguteingangsseitigen Bereich 40 in das Bandschneidwerk 4 eintretende Pflanzenbestand 42 die beschriebene Schichthöhenwalze 8 erst nach einer bestimmten Zeit. Dieser zeitliche Versatz zwischen Guteintritt und Messung der Schichthöhe 9 wird in dem besagten Totzeitintervall 109 berücksichtigt (siehe Fig. 6a).

Die ermittelten quasistationären Arbeitspunkte 103 werden sodann in einer Datenmatrix 104 gesammelt. Sind in der Datenmatrix 104 eine bestimmte Anzahl quasistationärer Arbeitspunkte 103 gesammelt, vorzugsweise vier quasistationäre Arbeitspunkte 103, werden in dieser Datenmatrix 104 für die gesammelten quasistationären Arbeitspunkte 103 in Analogie zum jeweiligen Initialkennfeld 93 die Abhängigkeiten zwischen Qualitätsparameter 82, hier Schwingungskoeffizient 83, durchsatzproportionaler Schichthöhe 9 und dem Arbeitsparameter 60, hier Bandgeschwindigkeit 65 des Prozessaggregats Mittenband 45, ermittelt. Die quasistationären Arbeitspunkte 103 werden in einem nächsten Schritt in eine Initialdatenmatrix 105 übernommen, die dem Initialkennfeld 93 mit übernommenen quasistationären Arbeitspunkten 103 entspricht. Sodann wird in einem Kennfeldaktualisierungsschritt 106 das aktualisierte Kennfeld 107 berechnet, welches das Initialkennfeld 93 ersetzt. Damit auch das aktualisierte Kennfeld 107 die beschriebene Kennfeldsteuerung 80 ermöglicht, in deren Ergebnis der Bandschneidwerkautomat 78 und/oder die Teilautomaten 81 optimierte Arbeitsparameter 60' generieren, wird für jedes aktualisierte Kennfeld 107 in einem Schritt "Aktualisierung Steuerkennlinie" 108 die Steuerkennlinie 90 neu berechnet, die sich in dem jeweils aktualisierten Kennfeld 107 entlang des Minimums des jeweiligen Schwingungskoeffizienten 83 oder des Abscheideverlusts 84 erstreckt und den jeweils optimalen Arbeitsparameters 60' beschreibt.

Das jeweils aktualisierte Kennfeld 107 bildet in dem jeweiligen Bandschneidwerkautomaten und/oder dem jeweiligen Teilautomaten sodann wieder das jeweilige Initialkennfeld 93 für einen folgenden Kennfeldanpassungsprozess.

Indem das jeweilige Kennfeld (79) als Initialkennfeld (93) ausgeführt ist und in dem Initialkennfeld (93) zumindest der Zusammenhang von Arbeitsparametern (60) eines Prozessaggregats (59) und Qualitätsparametern (82) durch Initialarbeitspunkte (94) beschrieben wird und im Erntebetrieb in Abhängigkeit von Messgrößen (97) Momentan-Arbeitspunkte (95) ermittelt werden, die Momentan-Arbeitspunkte (95) sodann in quasistationäre Arbeitspunkte (103) umgerechnet werden und die ermittelten quasistationären Arbeitspunkte (103) die korrespondierenden Arbeitspunkte (94) des jeweiligen Kennfeldes (79) überschreiben, sodass das Initialkennfeld (93) in ein aktualisiertes Kennfeld (107) gewandelt wird kann mittels einfacher Rechenverfahren unmittelbar im Erntebetrieb die Aktualisierung des Kennfeldes bewirkt werden, ohne dass hierfür spezielle Arbeitspunkte gezielt angefahren werden müssen.

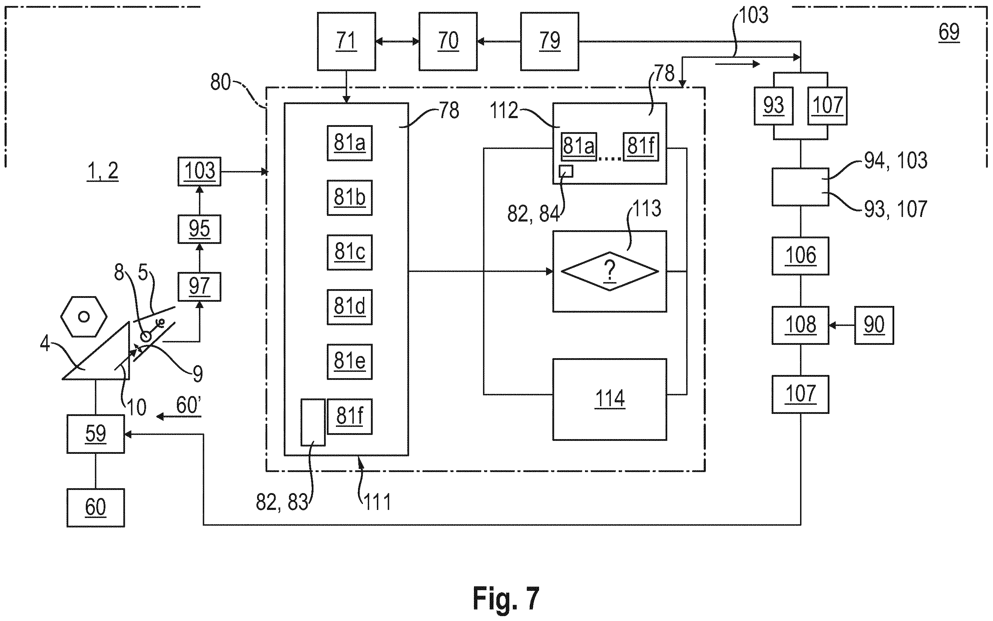

Figur 7 beschreibt schließlich das erfindungsgemäße Fahrerassistenzsystem 69 im Zusammenhang. Gemäß den vorhergehenden Ausführungen bildet das Bandschneidwerk 4 zusammen mit dem Fahrerassistenzsystem 69 einen Bandschneidwerkautomat 78, der zugleich Teilautomaten 81a..f umfassen kann. Indem im Speicher 70 des Fahrerassistenzsystems 69 Kennfelder 79 hinterlegt sind und die Rechenvorrichtung 71 dazu eingerichtet ist mittels der hinterlegten Kennfelder 79 den Bandschneidwerkautomat 78 und/oder die Teilautomaten 81a..f als Kennfeldsteuerung 80 zu betreiben, sind der Bandschneidwerkautomat 78 und/oder die Teilautomaten 81a..f in der Lage, Arbeitsparameter 60 der Prozessaggregate 59 des Bandschneidwerks 4 zu optimieren und die optimierten Arbeitsparameter 60' den Prozessaggregaten 59 des Bandschneidwerks 4 vorzugeben. Hierfür ermittelt das Fahrerassistenzsystem 69 in einem ersten Schritt die beschriebenen Messgrößen 97 des Bandschneidwerks 4 und der landwirtschaftlichen Erntemaschine 1. Zumindest aus den ermittelten Messgrößen 97 generierte das erfindungsgemäße Fahrerassistenzsystem 69 sodann die Momentan-Arbeitspunkte 95 des Bandschneidwerkautomaten 78 und/oder der Teilautomaten 81a..f. In einem nächsten Datenverarbeitungsschritt rechnet das Fahrerassistenzsystem 69 die Momentan-Arbeitspunkte 95 in der zuvor beschriebenen Weise in quasistationäre Arbeitspunkte 103 um und übergibt diese quasistationären Arbeitspunkte 103 sodann an den Bandschneidwerkautomaten 78 und/oder die Teilautomaten 81a..f. Die von dem Bandschneidwerkautomaten 78 und/oder den jeweiligen Teilautomaten 81a..f realisierte Kennfeldsteuerung 80 ist so beschaffen, dass die quasistationären Arbeitspunkte 103 an das jeweils hinterlegte bereits beschriebene Initialkennfeld 93 oder das bereits aktualisierte Kennfeld 107 übergeben werden. In dem jeweiligen Kennfeld 93, 107 wird sodann der dort hinterlegte Initialarbeitspunkt 94 durch den quasistationären Arbeitspunkt 103 ersetzt. Dabei wird, wie beschrieben, zunächst eine Anzahl quasistationärer Arbeitspunkte 103 in das jeweilige Kennfeld 93, 107 übernommen, wobei jeder dieser quasistationären Arbeitspunkte 103 einen Initialarbeitspunkt 94 ersetzt. Sodann wird ein Kennfeldaktualisierungsschritt 106 gestartet, der dazu führt, dass das jeweilige Kennfeld 93, 107 auf Basis der ermittelten quasistationären Arbeitspunkte 103 neu berechnet wird. In dem darauffolgenden Verfahrensschritt "Aktualisierung Steuerkennlinie" 108 wird eine neue Steuerkennlinie 90 des jeweiligen Kennfeldes 93, 107 ermittelt und letztlich bildet das auf diese Weise neu ermittelte Kennfeld und zugehörige Steuerkennlinie 90 das jeweils aktualisierte Kennfeld 107. Das Fahrerassistenzsystem 69 ermittelt sodann anhand des aktualisierten Kennfeldes 107 die jeweiligen, bereits beschriebenen optimierten Arbeitsparameter 60' und gibt diese dem jeweiligen Prozessaggregat 59 vor.

Die Kennfeldsteuerung 80 des Bandschneidwerkautomaten 78 und/oder der Teilautomaten 81a...f ist zudem so beschaffen, dass sie eine schnelle, eine dynamische Kennfeldadaption 111 und eine träge Kennfeldadaption 112 zulässt. Eine dynamische Kennfeldadaption 111 wird dann erreicht, wenn der Qualitätsparameter 82 des jeweiligen Kennfeldes 79 von dem beschriebene Schwingungskoeffizient 83 gebildet wird. Der Qualitätsparameter Schwingungskoeffizient 83 lässt deshalb eine schnelle, dynamische Kennfeldsteuerung 80 zu, da dieser Qualitätsparameter 82 von der im Schrägförderer 5 positionierten Schichthöhenwalze 8 detektierten Schichthöhe 9 abhängt und unmittelbar nach Eintritt des Erntegutstromes 10 in die landwirtschaftliche Arbeitsmaschine 1 bestimmt wird. Demgegenüber stellt sich die träge Kennfeldadaption 112 dadurch ein, dass der Qualitätsparameter 82 des jeweiligen Kennfeldes 79 von dem bereits beschriebenen Abscheideverlust 84 gebildet wird und dieser erst gemessen wird, wenn der Restmaterialstrom 33 und die in ihm enthaltenen Verlustkörner die landwirtschaftliche Arbeitsmaschine 1 in deren rückwärtigen Bereich verlassen. Obgleich zu einem späten Zeitpunkt generiert hat die träge Kennfeldadaption 112 den Vorteil, dass sie einen Parameter, hier den Abscheideverlust 84 detektiert, der maßgeblich die Arbeitsqualität der landwirtschaftlichen Arbeitsmaschine 1 bestimmt und hohe Abscheideverluste 84 immer auch ein Indikator für einen nicht optimalen Gutfluss in der landwirtschaftlichen Arbeitsmaschine 1 sind, wobei einem nicht optimalen Gutfluss in der landwirtschaftlichen Arbeitsmaschine 1 insbesondere dadurch entgegengewirkt werden kann, wenn der Erntevorsatz 3, hier das Bandschneidwerk 4, einen homogenen Erntegutstrom 10 erzeugt, der dann kontinuierlich an die landwirtschaftliche Arbeitsmaschine 1 übergeben wird.

Zudem kann das Fahrerassistenzsystem 69 so beschaffen sein, dass die Kennfeldsteuerung 80 einen Prüfschritt 113 umfasst, in welchem geprüft wird, ob sich für die zu optimierenden Arbeitsparameter 60 bei Anwendung der dynamischen Kennfeldadaption 111 und der trägen Kennfeldadaption 112 gegenläufige Tendenzen für den Wert des jeweils optimierten Arbeitsparameters 60' einstellen. Ist dies der Fall ist in einer vorteilhaften Ausgestaltung der Erfindung vorgesehen, dass eine sogenannte Kostenfunktion entscheidet, welcher Arbeitspunkt (95, 103), der sich aus den Steuerkennlinien (90) ergibt angefahren wird, wobei die Kostenfunktion die Parameter Durchsatz/h, Schwingungskoeffizient (83), Abscheideverluste (84), Schneidwerksverluste beinhaltet und wobei diese Parameter unterschiedlich gewichtet sein können.

Weiter ist das Fahrerassistenzsystem 69 so beschaffen, das es bei der Generierung der jeweiligen Kennfelder 79, wobei dies sowohl die Initialkennfelder 93 als auch die aktualisierten Kennfelder 107 sein können, Expertenwissen 114 berücksichtigt.

**Bezugszeichenliste:**

| | | | |
|---|---|---|---|
| 1 | landwirtschaftliche Arbeitsmaschine | 34 | Haspelantriebsmotor |
| 2 | Mähdrescher | 35 | Pfeilrichtung |
| 3 | Erntevorsatz | | |
| 4 | Bandschneidwerk | 40 | ernteguteingangsseitiger Bereich |
| 5 | Schrägförderer | 41 | Messerbalken |
| 6 | Förderorgane | 42 | Pflanzenbestand |
| 7 | Schwenkachse | 43 | linksseitiges Querförderband |
| 8 | Schichthöhenwalze | 44 | rechtsseitiges Querförderband |
| 9 | Schichthöhe | 45 | Mittenband |
| 10 | Erntegutstrom | 46-49 | Pfeilrichtung |
| 11 | Dreschkorb | 50 | Einzugswalze |
| 12 | Dreschorgan | 51 | Haspel |
| 13 | Umlenktrommel | 52-53 | Pfeilrichtung |
| 14 | Abscheiderotoranordnung | 54,55 | Hubzylinder |
| 15 | Trenneinrichtung | 56 | Haspeltragarm |
| 16 | Körner | 57 | Rahmen |
| 17 | Rücklaufboden | 58 | Mitnahmezinken |
| 18 | Zuführboden | 59 | Prozessaggregat |
| 19 | Siebebene | 60 | Arbeitsparameter |
| 20 | Siebebene | 60' | optimierter Arbeitsparameter |
| 21 | Gebläse | 61 | Schnittgeschwindigkeit |
| 22 | Reinigungseinrichtung | 62 | Messerhub |
| 23 | Elevator | 63-65 | Bandgeschwindigkeit |
| 24 | Korntank | 66 | Einzugswalzenhorizontalposition |
| 25 | Körnerstrom | 67 | Haspelvertikalposition |
| 26 | Gehäuse | 68 | Haspelhorizontalposition |
| 27 | Strohhäcksler | 69 | Fahrerassistenzsystem |
| 28 | Zerkleinerungseinrichtung | 70 | Speicher |
| 29 | Strohleitklappe | 71 | Rechenvorrichtung |
| 30 | Stroh | 72 | interne Informationen |
| 31 | Boden | 73 | externe Informationen |
| 32 | Gutverteileinrichtung | 74 | hinterlegte Informationen |
| 33 | Restmaterialstrom | 75 | Kabine |
| 76 | Bedien- und Anzeigeeinheit | 109 | Totzeitintervall |
| 77 | Fahrer | 110 | Messkette |
| 78 | Bandschneidwerkautomat | 111 | dynamische Kennfeldadaption |
| 79 | Kennfeld | 112 | träge Kennfeldadaption |
| 80 | Kennfeldsteuerung | 113 | Prüfschritt |
| 81 | Teilautomat | 114 | Expertenwissen |
| 82 | Qualitätsparameter | | |
| 83 | Schwingungskoeffizient | | |
| 84 | Abscheideverlust | | |
| 85 | Schwenkachse | | |
| 86 | Auslenkung | | |
| 87 | Schrägförderleisten | | |
| 88 | Kornverlustsensor | | |
| 89 | Kornverlust | | |
| 90 | Steuerkennlinie | | |
| 91 | Expertenwissen | | |
| 92 | Hydraulikdruck | | |
| 93 | Initialkennfeld | | |
| 94 | Initialarbeitspunkt | | |
| 95 | Momentan-Arbeitspunkt | | |
| 96 | Zeit | | |
| 97 | Messgröße | | |
| 98 | Längsschwingung | | |
| 99 | Querschwingung | | |
| 100 | Bestandshöhe | | |
| 101 | Datenmatrix | | |
| 102 | Zeitintervall | | |
| 103 | quasistationärer Arbeitspunkt | | |
| 104 | Datenmatrix | | |
| 105 | Initialdatenmatrix | | |
| 106 | Kennfeldaktualisierungsschritt | | |
| 107 | aktualisiertes Kennfeld | | |
| 108 | Schritt "Aktualisierung Steuerkennlinie" | | |

## Patentansprüche

1. Landwirtschaftlichen Erntemaschine (1) mit einem Fahrerassistenzsystem (69) und mit einem als Bandschneidwerk (4) ausgebildeten Erntevorsatz (3) zum Schneiden und Aufnehmen von Erntegut, wobei das Fahrerassistenzsystem (69) einen Speicher (70) zum Hinterlegen von Daten und eine Rechenvorrichtung (71) zur Verarbeitung der in dem Speicher (70) hinterlegten Daten umfasst und das Bandschneidwerk (4) mindestens ein Mittenband (45) zur Förderung von Erntegut zu einer Einzugswalze (50) und/oder zu einem Einzugskanal eines Schrägförderers (5) und mindestens ein linksseitig und ein rechtsseitig zu dem Mittenband (45) angeordnetes Querförderband (43, 44) zur Förderung des Erntegutes zum Mittenband (45) umfasst, wobei das Mittenband (45), das linksseitige und das rechtsseitige Querförderband (43, 44) in Fahrtrichtung hinter einem Messerbalken (41) angeordnet sind und das Bandschneidwerk (4) obenseitig eine Haspel (51) aufnimmt
**dadurch gekennzeichnet,**
**dass** das Bandschneidwerk (4) zusammen mit dem Fahrerassistenzsystem (69) einen Bandschneidwerkautomat (78) bildet, indem im Speicher (70) des Fahrerassistenzsystems (69) Kennfelder (79) hinterlegt sind und die Rechenvorrichtung (71) dazu eingerichtet ist mittels der hinterlegten Kennfelder (79) den Bandschneidwerkautomat (78) als Kennfeldsteuerung (80) zu betreiben und der Bandschneidwerkautomat (78) eingerichtet ist, Arbeitsparameter (60) des Bandschneidwerks (4) zu optimieren und die optimierten Arbeitsparameter (60') dem Bandschneidwerk (4) vorzugeben, wobei das eine oder die mehreren dem Bandschneidwerkautomat (78) zugeordneten Kennfelder (79) zumindest den Zusammenhang zwischen einem oder mehreren Arbeitsparametern (60) und Qualitätsparametern (82) beschreiben und dem jeweiligen Kennfeld (79) eine Steuerkennlinie (90) zugeordnet ist und die Steuerkennlinie (90) im Bereich des Minimums des jeweiligen Qualitätsparameters (82) liegt und der Bandschneidwerkautomat (78) mittels der Steuerkennlinie (90) optimierte Arbeitsparameter (60') ermittelt und den jeweils optimierten Arbeitsparameter (60') dem Bandschneidwerk (4) vorgibt.

2. Landwirtschaftlichen Erntemaschine (1) mit einem Fahrerassistenzsystem (69) und mit einem als Bandschneidwerk (4) ausgebildeten Erntevorsatz (3) nach Anspruch 1,
**dadurch gekennzeichnet, dass**
zumindest das rechtsseitige und das linksseitige Querförderband (43, 44), das Mittenband (45), die Einzugswalze (50), die Haspel (51) und/oder der Messerbalken (41) Prozessaggregate (59) des Bandschneidwerks (4) bilden und der Bandschneidwerkautomat (78) eingerichtet ist die Arbeitsparameter (60) eines oder mehrerer dieser Prozessaggregate (59) zu optimieren und die optimierten Arbeitsparameter (60') dem jeweiligen Prozessaggregat (59) vorzugeben.

3. Landwirtschaftlichen Erntemaschine (1) mit einem Fahrerassistenzsystem (69) und mit einem als Bandschneidwerk (4) ausgebildeten Erntevorsatz (3) nach Anspruch 2,
**dadurch gekennzeichnet, dass**
der Bandschneidwerkautomat (78) eingerichtet ist, prozessaggregat-spezifische Teilautomaten (80a..f) in der Weise auszubilden, dass der Bandschneidwerkautomat (78) einen oder mehrere Querförderbandautomaten (80a, b), einen Mittenbandautomat (80c), einen Haspelautomat (80d), einen Messerbalkenautomat (80e) und/oder einen Einzugswalzenautomat (80f) ausbildet und die jeweiligen Teilautomaten (80a..f) eingerichtet sind die Arbeitsparameter (60) der Querförderbänder (43, 44), des Mittenbandes (45), der Haspel (51), des Messerbalkens (41) und/oder der Einzugswalze (50) des Bandschneidwerks (4) zu optimieren und die optimierten Arbeitsparameter (60') dem jeweiligen Prozessaggregat (59) des Bandschneidwerks (4) vorzugeben.

4. Landwirtschaftlichen Erntemaschine (1) mit einem Fahrerassistenzsystem (69) und mit einem als Bandschneidwerk (4) ausgebildeten Erntevorsatz (3) Anspruch 3,
**dadurch gekennzeichnet, dass**
jedem Teilautomat (80a..f) ein oder mehrere Kennfelder (79) zugeordnet sind, wobei das eine oder die mehreren Kennfelder (79) zumindest den Zusammenhang von Arbeitsparametern (60) des dem jeweiligen Teilautomat (80a..f) zugeordneten Prozessaggregats (59) und Qualitätsparametern (82) beschreiben und dem jeweiligen Kennfeld (79) eine Steuerkennlinie (90) zugeordnet ist und die Steuerkennlinie (90) im Bereich des Minimums des jeweiligen Qualitätsparameters (82) liegt und der Bandschneidwerkautomat (78) mittels der Steuerkennlinie (90) optimierte Arbeitsparameter (60') ermittelt und den jeweils optimierten Arbeitsparameter (60') dem Bandschneidwerk (4) vorgibt .

5. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
der oder die Qualitätsparameter (82) des einen oder der mehreren Kennfelder (79) ein Schwingungskoeffizient (83) und/oder ein Abscheideverlust (84) ist.

6. Landwirtschaftlichen Erntemaschine (1) mit einem Fahrerassistenzsystem (69) und mit einem als Bandschneidwerk (4) ausgebildeten Erntevorsatz (§) nach Anspruch 5,
**dadurch gekennzeichnet, dass**
der Schwingungskoeffizient (83) eine Schwankung des Erntegutdurchsatzes beschreibt und Mittel (8) vorgesehen sind, die einen Erntegutdurchsatz und den die Schwankung des Erntegutdurchsatzes beschreibenden Schwingungskoeffizient (83) in einem vor den Dreschorganen (12) der landwirtschaftlichen Erntemaschine (1) liegenden Bereich ermitteln.

7. Landwirtschaftlichen Erntemaschine (1) mit einem Fahrerassistenzsystem (69) und mit einem als Bandschneidwerk (4) ausgebildeten Erntevorsatz (3) nach Anspruch 5,
**dadurch gekennzeichnet, dass**
der Abscheideverlust (84) den Kornverlust beschreibt, nämlich den aus der landwirtschaftlichen Erntemaschine (1) ausgeschiedenen Verlustkornanteil.

8. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
das jeweilige Kennfeld (79) einen den Erntegutdurchsatz repräsentierenden Parameter, vorzugsweise die Schichthöhe (9), berücksichtigt.

9. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
das jeweilige Kennfeld (79) den jeweiligen Arbeitsparameter (60) in Abhängigkeit vom Schwingungskoeffizienten (83) und der den Erntegutdurchsatz repräsentierenden Schichthöhe (9) beschreibt.

10. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
das jeweilige Kennfeld (79) den oder die jeweiligen Arbeitsparameter (60) zumindest in Abhängigkeit vom Abscheideverlust (84) beschreibt.

11. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
das jeweilige Kennfeld (79) als Initialkennfeld (93) ausgeführt ist, wobei in dem Initialkennfeld (93) zumindest der Zusammenhang von Arbeitsparametern (60) eines Prozessaggregats (59) und Qualitätsparametern (82) durch Initialarbeitspunkte (94) beschrieben wird, im Erntebetrieb in Abhängigkeit von Messgrößen (97) Momentan-Arbeitspunkte (95) ermittelt werden, die Momentan-Arbeitspunkte (95) in quasistationäre Arbeitspunkte (103) umgerechnet werden und die ermittelten quasistationären Arbeitspunkte (103) die korrespondierenden Arbeitspunkte (94) des jeweiligen Kennfeldes (79) überschreiben, sodass das Initialkennfeld (93) in ein aktualisiertes Kennfeld (107) gewandelt wird.

12. Landwirtschaftlichen Erntemaschine (1) mit einem Fahrerassistenzsystem (69) und mit einem als Bandschneidwerk (4) ausgebildeten Erntevorsatz (3) nach Anspruch 11,
**dadurch gekennzeichnet, dass**
die Messgrößen (97) die Längsschwingung (98) und/oder die Querschwingung (99) eines die landwirtschaftliche Erntemaschine (1) durchlaufenden Erntegutstromes (10) und/oder die Bestandshöhe (42) und/oder den Hydraulikdruck (92) oder Leistungsbedarf eines Haspelantriebsmotors (34) umfassen und wobei die Messgrößen (97) in Qualitätsparameter (82) oder einen Erntegutdurchsatz umgerechnet werden.

13. Landwirtschaftlichen Erntemaschine (1) mit einem Fahrerassistenzsystem (69) und mit einem als Bandschneidwerk (4) ausgebildeten Erntevorsatz (3) nach Anspruch 11,
**dadurch gekennzeichnet, dass**
der Momentan-Arbeitspunkt (95) in einen quasistationären Arbeitspunkt (103) übergeht, wenn eine oder mehrere Messgrößen (97) innerhalb eines Zeitintervalls (102), vorzugsweise innerhalb eines Zeitintervalls (102) von 6 Sekunden annähernd konstant bleiben.

14. Landwirtschaftlichen Erntemaschine (1) mit einem Fahrerassistenzsystem (69) und mit einem als Bandschneidwerk (4) ausgebildeten Erntevorsatz (3) nach Anspruch 13,
**dadurch gekennzeichnet, dass**
das Zeitintervall (102) so bemessen ist, dass ein Totzeitintervall (109) in der Messkette kompensiert wird.

15. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
der Arbeitsparameter (60) des Prozessaggregats "rechtsseitiges Querförderband" (44) zumindest die Bandgeschwindigkeit (64) des rechtsseitigen Querförderbandes (44), der Arbeitsparameter (69) des Prozessaggregats "linksseitiges Querförderband" (43) zumindest die Bandgeschwindigkeit (63) des linksseitigen Querförderbandes (43) und Arbeitsparameter (60) des Prozessaggregats Mittenband (45) zumindest die Bandgeschwindigkeit (65) des Mittenbandes (45), der Arbeitsparameter (60) des Prozessaggregats Haspel (51) zumindest die Haspelvertikalposition (67) und/oder die Haspelhorizontalposition (68), der Arbeitsparameter (60) des Prozessaggregats Einzugswalze (50) zumindest die Einzugswalzenhorizontalposition (66) und/oder die Einzugswalzendrehzahl (49), der Arbeitsparameter (60) des Prozessaggregats Messerbalken (41) zumindest die Schnittgeschwindigkeit (61) und/oder den Messerhub (62) umfasst.

16. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
das Kennfeld (79) den Zusammenhang zwischen dem Qualitätsparameter Schwingungskoeffizient (83), dem den Erntegutdurchsatz repräsentierenden Parameter Schichthöhe (9) und dem Arbeitsparameter "Bandgeschwindigkeit Mittenband" (65) beschreibt und die dem Kennfeld (79) zugeordnete Steuerkennlinie (90) im Bereich des Minimums des Schwingungskoeffizienten (83) liegt.

17. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
das Kennfeld (79) den Zusammenhang zwischen dem Qualitätsparameter Schwingungskoeffizient (83), dem den Erntegutdurchsatz repräsentierenden Parameter Schichthöhe (9) und dem Arbeitsparameter "Bandgeschwindigkeit rechtsseitiges und/oder linksseitiges Querförderband" (63, 64) beschreibt und die dem Kennfeld (79) zugeordnete Steuerkennlinie (90) im Bereich des Minimums des Schwingungskoeffizienten (83) liegt.

18. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
das Kennfeld (79) den Zusammenhang zwischen dem Qualitätsparameter Schwingungskoeffizient (83), dem den Erntegutdurchsatz repräsentierenden Parameter Schichthöhe (9) und dem Arbeitsparameter Haspelhorizontalposition (68) und/oder Haspelvertikalposition (67) beschreibt und die dem Kennfeld (79) zugeordnete Steuerkennlinie (90) im Bereich des Minimums des Schwingungskoeffizienten (83) liegt.

19. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
das Kennfeld (79) den Zusammenhang zwischen dem Qualitätsparameter Abscheideverlust (84) und den Arbeitsparametern Geschwindigkeit Mittenband (65) und Geschwindigkeit linksseitiges und/oder rechtsseitiges Querförderband (63, 64) beschreibt und die dem Kennfeld (79) zugeordnete Steuerkennlinie (90) im Bereich des Minimums des Abscheideverlusts (84) liegt.

20. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
das Kennfeld (79) den Zusammenhang zwischen dem Qualitätsparameter Abscheideverlust (84), dem den Erntegutdurchsatz repräsentierenden Parameter Hydraulikdruck (92) oder Leistungsbedarf eines Haspelantriebsmotors (34) / Haspelantriebszylinders (54, 55) und dem Arbeitsparameter Haspelhorizontalposition (68) und/oder Haspelvertikalposition (67) beschreibt und die dem Kennfeld (79) zugeordnete Steuerkennlinie (90) im Bereich des Minimums des Abscheideverlusts (84) liegt.

21. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
**dadurch gekennzeichnet, dass**
die Anpassung des jeweiligen Kennfeldes (79) in Abhängigkeit vom Schwingungskoeffizienten (83) eine schnelle, eine dynamische Anpassung (111) des jeweiligen Kennfeldes (79) bewirkt während die Anpassung des jeweiligen Kennfeldes (79) in Abhängigkeit vom Abscheideverlust (84) eine langsame, eine träge Anpassung (112) des jeweiligen Kennfeldes (79) bewirkt.

22. Landwirtschaftlichen Erntemaschine (1) mit einem Fahrerassistenzsystem (69) und mit einem als Bandschneidwerk (4) ausgebildeten Erntevorsatz (3) nach einem der vorhergehenden Ansprüche,
wobei das Fahrerassistenzsystem (69) weiter eingerichtet ist
a. Messgrößen (97) des Bandschneidwerks (4) und/oder der landwirtschaftlichen Arbeitsmaschine (1) zu ermitteln
b. zumindest aus den ermittelten Messgrößen (97) Momentan-Arbeitspunkte (95) abzuleiten
c. den Momentan-Arbeitspunkt (95) in einen quasistationären Arbeitspunkt (103) umzurechnen
d. den quasistationären Arbeitspunkt (103) an den jeweiligen Bandschneidwerkautomat (78) oder einen oder mehrere Teilautomaten (80a..f) zu übergeben
e. in dem jeweiligen Bandschneidwerkautomat (78) oder Teilautomat (80a..f) an das dort jeweils hinterlegte Initialkennfeld (93) oder das bereits aktualisierte Kennfeld (107) zu übergeben
f. in dem jeweiligen Kennfeld (93, 107) einen Initialarbeitspunkt (97) oder einen bereits aktualisierten Arbeitspunkt durch einen quasistationären Arbeitspunkt (103) zu ersetzen
g. unter Berücksichtigung der eingefügten quasistationären Arbeitspunkte (103) ein aktualisiertes Kennfeld (107) zu berechnen
h. die Steuerkennlinie (90) des aktualisierten Kennfeldes (107) zu ermittelt
i. mittels der aktualisierten Steuerkennlinie (90) optimierte Arbeitsparameter (60') zu ermitteln
k. den jeweils optimierten Arbeitsparameter (60') dem jeweiligen Prozessaggregat (59) vorzugeben.

23. Landwirtschaftlichen Erntemaschine (1) mit einem Fahrerassistenzsystem (69) und mit einem als Bandschneidwerk (4) ausgebildeten Erntevorsatz (3) nach Anspruch 22,
**dadurch gekennzeichnet, dass**
die Adaption des Kennfeldes eine Überlagerung einer dynamischen Kennfeldadaption "Schwingungskoeffizient" (111) und einer trägen Kennfeldadaption "Abscheideverlust" (112) umfasst wobei die dynamische Kennfeldadaption (111) dadurch bewirkt wird, dass der Qualitätsparameter (82) des jeweiligen Kennfeldes (79) von dem Schwingungskoeffizienten (83) gebildet wird und die träge Kennfeldadaption (112) dadurch bewirkt wird, dass der Qualitätsparameter (82) des jeweiligen Kennfeldes (79) von dem Abscheideverlust (84) gebildet wird.

24. Landwirtschaftliche Erntemaschine (1) mit einem Fahrerassistenzsystem (69) und mit einem als Bandschneidwerk (4) ausgebildeten Erntevorsatz (3) nach Anspruch 22,
**dadurch gekennzeichnet, dass**
das Fahrerassistenzsystem (69) in einen Prüfschritt (113) prüft, ob sich für die zu optimierenden Arbeitsparameter (60') bei Anwendung der dynamischen Kennfeldadaption (111) und der trägen Kennfeldadaption (112) gegenläufige Tendenzen für den Wert des jeweils optimierten Arbeitsparameters (60') einstellen.

25. Landwirtschaftliche Erntemaschine (1) mit einem Fahrerassistenzsystem (69) und mit einem als Bandschneidwerk (4) ausgebildeten Erntevorsatz (3) nach Anspruch 24,
**dadurch gekennzeichnet, dass**
eine Kostenfunktion entscheidet, welcher Arbeitspunkt (95, 103), der sich aus den Steuerkennlinien (90) ergibt angefahren wird, wobei die Kostenfunktion die Parameter Durchsatz/h, Schwingungskoeffizient (83), Abscheideverluste (84), Schneidwerksverluste beinhaltet und wobei diese Parameter unterschiedlich gewichtet sein können.

26. Landwirtschaftliche Erntemaschine (1) mit einem Fahrerassistenzsystem (69) und mit einem als Bandschneidwerk (4) ausgebildeten Erntevorsatz (3) nach Anspruch 22,
**dadurch gekennzeichnet, dass**
das Fahrerassistenzsystem (69) bei der Generierung der jeweiligen Kennfelder (79, 93, 107) Expertenwissen (114) berücksichtigt.

27. Landwirtschaftliche Erntemaschine (1) mit einem Fahrerassistenzsystem (69) und mit einem als Bandschneidwerk (4) ausgebildeten Erntevorsatz (3) nach einem der vorhergehenden Ansprüche, **dadurch gekennzeichnet, dass** der Messerbalken (41) und zumindest die ihm nachgeordneten Querförderbänder (43 ,44) flexibel ausgebildet sind.

## Claims

1. An agricultural harvesting machine (1) with a driver assistance system (69) and with a harvester front attachment (3) configured as a draper cutting unit (4) for cutting and picking up harvested material, wherein the driver assistance system (69) comprises a memory (70) for storing data and a computing device (71) for processing the data stored in the memory (70) and the draper cutting unit (4) comprises at least one centre belt (45) for conveying harvested material to an intake roller (50) and/or to an intake channel of an inclined conveyor (5) and at least one transverse conveyor belt (43, 44) disposed to the left side and to the right side of the centre belt (45) for conveying the harvested material to the centre belt (45), wherein the centre belt (45), the left side and the right side transverse conveyor belt (43, 44) are disposed behind a cutter bar (41) in the direction of travel and the upper side of the draper cutting unit (4) receives a reel (51),
**characterized in that**
the draper cutting unit (4) together with the driver assistance system (69) form an automated draper cutting unit (78), in which characteristic diagrams (79) are stored in the memory (70) of the driver assistance system (69) and the computing device (71) is configured to operate the automated draper cutting unit (78) as a characteristic diagram controller (80) by means of the stored characteristic diagrams (79) and the automated draper cutting unit (78) is configured to optimize operating parameters (60) of the draper cutting unit (4) and to specify the optimized operating parameters (60') to the draper cutting unit (4), wherein the one or the plurality of characteristic diagrams (79) associated with the automated draper cutting unit (78) describe at least the relationship between one or more operating parameters (60) and quality parameters (82) and a control characteristic curve (90) is associated with the respective characteristic diagram (79) and the control characteristic curve (90) lies in the region of the minimum of the respective quality parameter (82) and the automated draper cutting unit (78) determines optimized operating parameters (60') by means of the control characteristic curve (90) and specifies the respective optimized operating parameters (60') to the draper cutting unit (4).

2. The agricultural harvesting machine (1) with a driver assistance system (69) and with a harvester front attachment (3) configured as a draper cutting unit (4) according to claim 1,
**characterized in that**
at least the right side and the left side transverse conveyor belt (43, 44), the centre belt (45), the intake roller (50), the reel (51) and/or the cutter bar (41) form processing assemblies (59) of the draper cutting unit (4) and the automated draper cutting unit (78) is configured to optimize the operating parameters (60) of one or more of these processing assemblies (59) and to specify the optimized operating parameters (60') to the respective processing assembly (59).

3. The agricultural harvesting machine (1) with a driver assistance system (69) and with a harvester front attachment (3) configured as a draper cutting unit (4) according to claim 2,
**characterized in that**
the automated draper cutting unit (78) is configured to form processing assembly-specific automated subunits (80a...f) in a manner such that the automated draper cutting unit (78) forms one or more automated transverse conveyor belts (80a, b), an automated centre belt (80c), an automated reel (80d), an automated cutter bar (80e) and/or an automated intake roller (80f) and the respective automated subunits (80a...f) are configured to optimize the operating parameters (60) of the transverse conveyor belts (43, 44), the centre belt (45), the reel (51), the cutter bar (41) and/or the intake roller (50) of the draper cutting unit (4) and to specify the optimized operating parameters (60') to the respective processing assemblies (59) of the draper cutting unit (4).

4. The agricultural harvesting machine (1) with a driver assistance system (69) and with a harvester front attachment (3) configured as a draper cutting unit (4) according to claim 3,
**characterized in that**
one or more characteristic diagrams (79) are associated with each automated subunit (80a...f), wherein the one or the plurality of characteristic diagrams (79) describe at least the relationship between operating parameters (60) of the processing assemblies (59) associated with the respective automated subunit (80a...f) and quality parameters (82) and a control characteristic curve (90) is associated with the respective characteristic diagram (79) and the control characteristic curve (90) lies in the region of the minimum of the respective quality parameter (82) and the automated draper cutting unit (78) determines optimized operating parameters (60') by means of the control characteristic curve (90) and specifies the respective optimized operating parameters (60') to the draper cutting unit (4).

5. The agricultural harvesting machine (1) with a driver assistance system (69) and with a harvester front attachment (3) configured as a draper cutting unit (4) according to one of the preceding claims,
**characterized in that**
the quality parameter or quality parameters (82) of the one or more characteristic diagrams (79) is an oscillation coefficient (83) and/or a separation loss (84).

6. The agricultural harvesting machine (1) with a driver assistance system (69) and with a harvester front attachment (3) configured as a draper cutting unit (4) according to claim 5,
**characterized in that**
the oscillation coefficient (83) describes a fluctuation of the harvested material throughput and means (8) are provided which determine a harvested material throughput and the oscillation coefficient (83) describing the fluctuation of the harvested material throughput in a region lying in front of the threshing units (12) of the agricultural harvesting machine (1).

7. The agricultural harvesting machine (1) with a driver assistance system (69) and with a harvester front attachment (3) configured as a draper cutting unit (4) according to claim 5,
**characterized in that**
the separation loss (84) describes the loss of grain, namely the proportion of lost grain which is discarded from the agricultural harvesting machine (1).

8. The agricultural harvesting machine (1) with a driver assistance system (69) and with a harvester front attachment (3) configured as a draper cutting unit (4) according to one of the preceding claims,
**characterized in that**
the respective characteristic diagram (79) takes into consideration a parameter which represents the harvested material throughput, preferably the layer height (9).

9. The agricultural harvesting machine (1) with a driver assistance system (69) and with a harvester front attachment (3) configured as a draper cutting unit (4) according to one of the preceding claims,
**characterized in that**
the respective characteristic diagram (79) describes the respective operating parameters (60) as a function of oscillation coefficients (83) and of the layer height (9) representing the harvested material throughput.

10. The agricultural harvesting machine (1) with a driver assistance system (69) and with a harvester front attachment (3) configured as a draper cutting unit (4) according to one of the preceding claims,
**characterized in that**
the respective characteristic diagram (79) describes the respective operating parameter or operating parameters (60) at least as a function of the separation loss (84).

11. The agricultural harvesting machine (1) with a driver assistance system (69) and with a harvester front attachment (3) configured as a draper cutting unit (4) according to one of the preceding claims,
**characterized in that**
the respective characteristic diagram (79) is configured as an initial characteristic diagram (93) wherein, in the initial characteristic diagram (93), at least the relationship between operating parameters (60) of a processing assembly (59) and quality parameters (82) is described by initial operating points (94), instantaneous operating points (95) are determined during the harvesting operation as a function of measured variables (97), the instantaneous operating points (95) are converted into quasi-stationary operating points (103) and the determined quasi-stationary operating points (103) overwrite the corresponding operating points (94) of the respective characteristic diagram (79), so that the initial characteristic diagram (93) is changed into an updated characteristic diagram (107).

12. The agricultural harvesting machine (1) with a driver assistance system (69) and with a harvester front attachment (3) configured as a draper cutting unit (4) according to claim 11,
**characterized in that**
the measured variables (97) comprise the longitudinal oscillation (98) and/or the transverse oscillation (99) of a flow of harvested material (10) passing through the agricultural harvesting machine (1) and/or the planted crop height (42) and/or the hydraulic pressure (92) or power requirement of a reel drive motor (34) and wherein the measured variables (97) are converted into quality parameters (82) or a harvested material throughput.

13. The agricultural harvesting machine (1) with a driver assistance system (69) and with a harvester front attachment (3) configured as a draper cutting unit (4) according to claim 11,
**characterized in that**
the instantaneous operating point (95) is converted into a quasi-stationary operating point (103) if, within a time interval (102), preferably within a time interval (102) of 6 seconds, one or more measured variables (97) remains almost constant.

14. The agricultural harvesting machine (1) with a driver assistance system (69) and with a harvester front attachment (3) configured as a draper cutting unit (4) according to claim 13,
**characterized in that**
the time interval (102) is measured such that a dead time interval (109) in the chain of measurements is compensated for.

15. The agricultural harvesting machine (1) with a driver assistance system (69) and with a harvester front attachment (3) configured as a draper cutting unit (4) according to one of the preceding claims,
**characterized in that**
the operating parameter (60) for the "right side transverse conveyor belt" (44) processing assembly comprises at least the belt speed (64) of the right side transverse conveyor belt (44), the operating parameter (69) for the "left side transverse conveyor belt" (43) processing assembly comprises at least the belt speed (63) of the left side transverse conveyor belt (43) and the operating parameter (60) for the centre belt (45) processing assembly comprises at least the belt speed (65) of the centre belt (45), the operating parameter (60) for the reel (51) processing assembly comprises at least the vertical reel position (67) and/or the horizontal reel position (68), the operating parameter (60) for the intake roller (50) processing assembly comprises at least the horizontal intake roller position (66) and/or the intake roller speed (49), the operating parameter (60) for the cutter bar (41) processing assembly comprises at least the cutting speed (61) and/or the knife stroke (62).

16. The agricultural harvesting machine (1) with a driver assistance system (69) and with a harvester front attachment (3) configured as a draper cutting unit (4) according to one of the preceding claims,
**characterized in that**
the characteristic diagram (79) describes the relationship between the oscillation coefficient (83) quality parameter, the layer height (9) parameter representing the harvested material throughput and the "belt speed of centre belt" (65) operating parameter and the control characteristic curve (90) associated with the characteristic diagram (79) lies in the region of the minimum of the oscillation coefficient (83).

17. The agricultural harvesting machine (1) with a driver assistance system (69) and with a harvester front attachment (3) configured as a draper cutting unit (4) according to one of the preceding claims,
**characterized in that**
the characteristic diagram (79) describes the relationship between the oscillation coefficient (83) quality parameter, the layer height (9) parameter representing the harvested material throughput and the "belt speed of right side and/or left side transverse conveyor belt" (63, 64) and the control characteristic curve (90) associated with the characteristic diagram (79) lies in the region of the minimum of the oscillation coefficient (83).

18. The agricultural harvesting machine (1) with a driver assistance system (69) and with a harvester front attachment (3) configured as a draper cutting unit (4) according to one of the preceding claims,
**characterized in that**
the characteristic diagram (79) describes the relationship between the oscillation coefficient (83) quality parameter, the layer height (9) parameter representing the harvested material throughput and the horizontal reel position (68) and/or vertical reel position (67) operating parameter and the control characteristic curve (90) associated with the characteristic diagram (79) lies in the region of the minimum of the oscillation coefficient (83).

19. The agricultural harvesting machine (1) with a driver assistance system (69) and with a harvester front attachment (3) configured as a draper cutting unit (4) according to one of the preceding claims,
**characterized in that**
the characteristic diagram (79) describes the relationship between the separation loss (84) quality parameter and the centre belt (65) speed and left side and/or right side transverse conveyor belt (63, 64) speed operating parameters and the control characteristic curve (90) associated with the characteristic diagram (79) lies in the region of the minimum of the separation loss (84).

20. The agricultural harvesting machine (1) with a driver assistance system (69) and with a harvester front attachment (3) configured as a draper cutting unit (4) according to one of the preceding claims,
**characterized in that**
the characteristic diagram (79) describes the relationship between the separation loss (84) quality parameter, the hydraulic pressure (92) or power requirement of a reel drive motor (34)/reel drive cylinder (54, 55) parameters representing the harvested material throughput and the horizontal reel position (68) and/or vertical reel position (67) operating parameter and the control characteristic curve (90) associated with the characteristic diagram (79) lies in the region of the minimum of the separation loss (84).

21. The agricultural harvesting machine (1) with a driver assistance system (69) and with a harvester front attachment (3) configured as a draper cutting unit (4) according to one of the preceding claims,
**characterized in that**
the adaptation of the respective characteristic diagram (79) as a function of the oscillation coefficient (83) brings about a rapid, dynamic adaptation (111) of the respective characteristic diagram (79), while the adaptation of the respective characteristic diagram (79) as a function of the separation loss (84) brings about a slow, delayed adaptation (112) of the respective characteristic diagram (79).

22. The agricultural harvesting machine (1) with a driver assistance system (69) and with a harvester front attachment (3) configured as a draper cutting unit (4) according to one of the preceding claims, wherein the driver assistance system (69) is further configured
a. to determine measured variables (97) of the draper cutting unit (4) and/or of the agricultural working machine (1)
b. to derive instantaneous operating points (95) from the determined measured variables (97)
c. to convert the instantaneous operating point (95) into a quasi-stationary operating point (103)
d. to transfer the quasi-stationary operating point (103) to the respective automated draper cutting unit (78) or to one or more automated subunits (80a...f)
e. in the respective automated draper cutting unit (78) or automated subunit (80a...f), to transfer to the respective stored initial characteristic diagram (93) or to the already-updated characteristic diagram (107)
f. in the respective characteristic diagram (93, 107), to replace an initial operating point (97) or an already-updated operating point by a quasi-stationary operating point (103)
g. to calculate an updated characteristic diagram (107), taking the inserted quasi-stationary operating points (103) into consideration
h. to determine the control characteristic curve (90) of the updated characteristic diagram (107)
i. to determine optimized operating parameters (60') by means of the updated control characteristic curve (90)
k. to specify the respective optimized operating parameters (60') to the respective processing assembly (59).

23. The agricultural harvesting machine (1) with a driver assistance system (69) and with a harvester front attachment (3) configured as a draper cutting unit (4) according to claim 22,
**characterized in that**
the adaptation of the characteristic diagram comprises a superimposition of a dynamic "oscillation coefficient" (111) characteristic diagram adaptation and a passive "separation loss" (112) characteristic diagram adaptation, wherein the dynamic characteristic diagram adaptation (111) thereby causes the quality parameter (82) of the respective characteristic diagram (79) to be formed by the oscillation coefficient (83) and the delayed characteristic diagram adaptation (112) thereby causes the quality parameter (82) of the respective characteristic diagram (79) to be formed by the separation loss (84).

24. The agricultural harvesting machine (1) with a driver assistance system (69) and with a harvester front attachment (3) configured as a draper cutting unit (4) according to claim 22,
**characterized in that**
in a test step (113), the driver assistance system (69) tests whether opposing tendencies for the value of the respective optimized operating parameter (60') are set for the operating parameters (60') to be optimized when applying the dynamic characteristic diagram adaptation (111) and the delayed characteristic diagram adaptation (112).

25. The agricultural harvesting machine (1) with a driver assistance system (69) and with a harvester front attachment (3) configured as a draper cutting unit (4) according to claim 24,
**characterized in that**
a cost function decides which operating point (95, 103) resulting from the control characteristic curves (90) is approached, wherein the cost function contains the parameters of throughput/h, oscillation coefficient (83), separation losses (84), cutting unit losses, and wherein these parameters may be weighted differently.

26. The agricultural harvesting machine (1) with a driver assistance system (69) and with a harvester front attachment (3) configured as a draper cutting unit (4) according to claim 22,
**characterized in that**
the driver assistance system (69) takes expert knowledge (114) into account during the generation of the respective characteristic diagrams (79, 93, 107).

27. The agricultural harvesting machine (1) with a driver assistance system (69) and with a harvester front attachment (3) configured as a draper cutting unit (4) according to one of the preceding claims, **characterized in that** the cutter bar (41) and at least the transverse conveyor belts (43, 44) disposed downstream thereof are flexible in configuration.

## Revendications

1. Machine de récolte agricole (1) comprenant un système d'assistance au conducteur (69) et un outil frontal de récolte (3) réalisé sous forme de tablier de coupe à tapis (4) et destiné à couper et ramasser des produits à récolter, le système d'assistance au conducteur (69) comportant une mémoire (70) pour enregistrer des données et un dispositif de calcul (71) pour traiter les données enregistrées dans la mémoire (70), et le tablier de coupe à tapis (4) comportant au moins un convoyeur central (45), destiné à transporter la récolte vers un rouleau d'alimentation (50) et/ou vers un canal d'alimentation d'un convoyeur incliné (5), et au moins un convoyeur transversal (43, 44) disposé sur le côté gauche et au moins un convoyeur transversal disposé sur le côté droit par rapport au convoyeur central (45), en vue du transport de la récolte vers le convoyeur central (45), le convoyeur central (45) et les convoyeurs transversaux (43, 44) côté gauche et côté droit étant disposés derrière une barre porte-lames (41), vu dans le sens du déplacement, et le tablier de coupe à tapis (4) accueillant un rabatteur (51) sur le dessus,
**caractérisée en ce que**
le tablier de coupe à tapis (4) forme avec le système d'assistance au conducteur (69) un automate à tablier de coupe à tapis (78), par le fait que des diagrammes caractéristiques (79) sont enregistrés dans la mémoire (70) du système d'assistance au conducteur (69), et le dispositif de calcul (71) est conçu pour faire fonctionner l'automate à tablier de coupe à tapis (78) en tant que commande à diagrammes caractéristiques (80), à l'aide des diagrammes caractéristiques (70) enregistrés, et l'automate à tablier de coupe à tapis (78) est conçu pour optimiser des paramètres de travail (60) du tablier de coupe à tapis (4) et prédéfinir les paramètres de travail optimisés (60') pour le tablier de coupe à tapis (4), le diagramme caractéristique (79) ou la pluralité de diagrammes caractéristiques associé(s) à l'automate à tablier de coupe à tapis (78) décrivant au moins la relation entre un ou plusieurs paramètres de travail (60) et paramètres de qualité (82), et une courbe caractéristique de commande (90) étant associée au diagramme caractéristique (79) respectif, et la courbe caractéristique de commande (90) se situant dans la région du minimum du paramètre de qualité (82) respectif, et l'automate à tablier de coupe à tapis (78) déterminant des paramètres de travail optimisés (60') à l'aide de la courbe caractéristique de commande (90) et prédéfinissant le paramètre de travail optimisé (60') respectif pour le tablier de coupe à tapis (4).

2. Machine de récolte agricole (1) comprenant un système d'assistance au conducteur (69) et un outil frontal de récolte (3) réalisé sous forme de tablier de coupe à tapis (4) selon la revendication 1, **caractérisée en ce qu'**au moins les convoyeurs transversaux côté droit et côté gauche (43, 44), le convoyeur central (45), le rouleau d'alimentation (50), le rabatteur (51) et/ou les barres porte-lames (41) constituent des unités de processus (59) du tablier de coupe à tapis (4), et l'automate à tablier de coupe à tapis (78) est conçu pour optimiser les paramètres de travail (60) d'une ou plusieurs de ces unités de processus (59) et prédéfinir les paramètres de travail optimisés (60') pour l'unité de processus (59) respective.

3. Machine de récolte agricole (1) comprenant un système d'assistance au conducteur (69) et un outil frontal de récolte (3) réalisé sous forme de tablier de coupe à tapis (4) selon la revendication 2, **caractérisée en ce que** l'automate à tablier de coupe à tapis (78) est conçu pour constituer des sous-automates (80a..f) spécifiques d'unité de processus, de manière à ce que l'automate à tablier de coupe à tapis (78) constitue un ou plusieurs automates à convoyeur transversal (80a, b), un automate à convoyeur central (80c), un automate à rabatteur (80d), un automate à barre porte-lames (80e) et/ou un automate à rouleau d'alimentation (80f), et à ce que les sous-automates (80a..f) respectifs soient conçus pour optimiser les paramètres de travail (60) des convoyeurs transversaux (43, 44), du convoyeur central (45), du rabatteur (51), de la barre porte-lames (41) et/ou du rouleau d'alimentation (50) du tablier de coupe à tapis (4) et pour prédéfinir les paramètres de travail optimisés (60') pour l'unité de processus (59) respective du tablier de coupe à tapis (4).

4. Machine de récolte agricole (1) comprenant un système d'assistance au conducteur (69) et un outil frontal de récolte (3) réalisé sous forme de tablier de coupe à tapis (4) selon la revendication 3, **caractérisée en ce qu'**un ou plusieurs diagrammes caractéristiques (79) sont associés à chaque sous-automate (80a..f), le ou les diagrammes caractéristiques (79) décrivant au moins la relation de paramètres de travail (60) de l'unité de processus (59), associée au sous-automate (80a..f) respectif, et de paramètres de qualité (82), et une courbe caractéristique de commande (90) étant associée au diagramme caractéristique (79) respectif, et la courbe caractéristique de commande (90) se situant dans la région du minimum du paramètre de qualité (82) respectif, et l'automate à tablier de coupe à tapis (78) déterminant des paramètres de travail optimisés (60') à l'aide de la courbe caractéristique de commande (90) et prédéfinissant le paramètre de travail optimisé (60') respectif pour le tablier de coupe à tapis (4).

5. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** le ou les paramètres de qualité (82) du ou des diagrammes caractéristiques (79) est/sont un coefficient d'oscillation (83) et/ou une perte à la séparation (84).

6. Machine de récolte agricole (1) comprenant un système d'assistance au conducteur (69) et un outil frontal de récolte (3) réalisé sous forme de tablier de coupe à tapis (4) selon la revendication 5, **caractérisée en ce que** le coefficient d'oscillation (83) décrit une variation du débit de récolte, et qu'il est prévu des moyens (8) qui déterminent un débit de récolte et le coefficient d'oscillation (83) décrivant la variation du débit de récolte, dans une région située devant les organes de battage (12) de la machine de récolte agricole (1).

7. Machine de récolte agricole (1) comprenant un système d'assistance au conducteur (69) et un outil frontal de récolte (3) réalisé sous forme de tablier de coupe à tapis (4) selon la revendication 5, **caractérisée en ce que** la perte de séparation (84) décrit la perte de grains, à savoir le taux de grains perdus éjectés de la machine de récolte agricole (1).

8. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** le diagramme caractéristique (79) respectif prend en compte un paramètre représentant le débit de récolte, de préférence la hauteur de couche (9).

9. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** le diagramme caractéristique (79) respectif décrit le paramètre de travail (60) respectif en fonction du coefficient d'oscillation (83) et de la hauteur de couche (9) représentant le débit de récolte.

10. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** le diagramme caractéristique (79) respectif décrit le ou les paramètres de travail (60) respectif(s), au moins en fonction de la perte à la séparation (84).

11. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** le diagramme caractéristique (79) respectif est réalisé sous forme de diagramme caractéristique initial (93), sachant que dans le diagramme caractéristique initial (93) au moins la relation de paramètres de travail (60) d'une unité de processus (59) et de paramètres de qualité (82) est décrite par des points de travail initiaux (94), que lors du service de récolte, des points de travail instantanés (95) sont déterminés en fonction de grandeurs de mesure (97), que les points de travail instantanés (95) sont convertis en points de travail quasi-stationnaires (103) et les points de travail quasi-stationnaires (103) déterminés se superposent aux points de travail (94) correspondants du diagramme caractéristique (79) respectif, de sorte que le diagramme caractéristique initial (93) est transformé en diagramme caractéristique mis à jour (107).

12. Machine de récolte agricole (1) comprenant un système d'assistance au conducteur (69) et un outil frontal de récolte (3) réalisé sous forme de tablier de coupe à tapis (4) selon la revendication 11, **caractérisée en ce que** les grandeurs de mesures (97) comprennent la vibration longitudinale (98) et/ou la vibration transversale (99) d'un flux de récolte (10) traversant la machine de récolte agricole (1) et/ou la hauteur de culture (42) et/ou la pression hydraulique (92) ou les besoins en puissance d'un moteur d'entraînement de rabatteur (34), et les grandeurs de mesure (97) étant converties en paramètres de qualité (82) ou en un débit de récolte.

13. Machine de récolte agricole (1) comprenant un système d'assistance au conducteur (69) et un outil frontal de récolte (3) réalisé sous forme de tablier de coupe à tapis (4) selon la revendication 11, **caractérisée en ce que** le point de travail instantané (95) se transforme en un point de travail quasi-stationnaire (103) lorsqu'une ou plusieurs grandeurs de mesure (97) restent à peu près constantes dans un intervalle de temps (102), de préférence dans un intervalle de temps (102) de 6 secondes.

14. Machine de récolte agricole (1) comprenant un système d'assistance au conducteur (69) et un outil frontal de récolte (3) réalisé sous forme de tablier de coupe à tapis (4) selon la revendication 13, **caractérisée en ce que** l'intervalle de temps (102) est prévu tel qu'un intervalle de temps mort (109) dans la chaîne de mesure soit compensé.

15. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** le paramètre de travail (60) de l'unité de processus « convoyeur transversal côté droit » (44) comprend au moins la vitesse de convoyeur (64) du convoyeur transversal côté droit (44), le paramètre de travail (69) de l'unité de processus « convoyeur transversal côté gauche » (43) comprend au moins la vitesse de convoyeur (63) du convoyeur transversal côté gauche (43), et le paramètre de travail (60) de l'unité de processus convoyeur central (45) comprend au moins la vitesse de convoyeur (65) du convoyeur central (45), le paramètre de travail (60) de l'unité de processus rabatteur (51) comprend au moins la position verticale du rabatteur (67) et/ou la position horizontale du rabatteur (68), le paramètre de travail (60) de l'unité de processus rouleau d'alimentation (50) comprend au moins la position horizontale du rouleau d'alimentation (66) et/ou la vitesse de rotation du rouleau d'alimentation (49), le paramètre de travail (60) de l'unité de processus barre porte-lames (41) comprend au moins la vitesse de coupe (61) et/ou la course des lames (62).

16. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** le diagramme caractéristique (79) décrit la relation entre le paramètre de qualité coefficient d'oscillation(83), le paramètre hauteur de couche (9) représentant le débit de récolte et le paramètre de travail « vitesse de convoyeur central » (65), et que la courbe caractéristique de commande (90) associée au diagramme caractéristique (79) se situe dans la région du minimum du coefficient d'oscillation(83).

17. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** le diagramme caractéristique (79) décrit la relation entre le paramètre de qualité coefficient d'oscillation(83), le paramètre hauteur de couche (9) représentant le débit de récolte et le paramètre de travail « vitesse de convoyeur côté droit et/ou côté gauche » (63, 64), et que la courbe caractéristique de commande (90) associée au diagramme caractéristique (79) se situe dans la région du minimum du coefficient d'oscillation(83).

18. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** le diagramme caractéristique (79) décrit la relation entre le paramètre de qualité coefficient d'oscillation(83), le paramètre hauteur de couche (9) représentant le débit de récolte et le paramètre de travail position horizontale de rabatteur (68) et/ou position verticale de rabatteur (67), et que la courbe caractéristique de commande (90) associée au diagramme caractéristique (79) se situe dans la région du minimum du coefficient d'oscillation(83).

19. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** le diagramme caractéristique (79) décrit la relation entre le paramètre de qualité perte à la séparation (84) et les paramètres de travail vitesse du convoyeur central (65) et vitesse des convoyeurs transversaux côté et gauche et/ou côté droit (63, 64), et que la courbe caractéristique de commande (90) associée au diagramme caractéristique (79) se situe dans la région du minimum de la perte à la séparation (84).

20. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** le diagramme caractéristique (79) décrit la relation entre le paramètre de qualité perte à la séparation (84), le paramètre pression hydraulique (92) représentant le débit de récolte ou les besoins en puissance d'un moteur d'entraînement de rabatteur (34)/vérin d'entraînement de rabatteur (54, 55) et le paramètre de travail position horizontale de rabatteur (68) et/ou position verticale de rabatteur (67), et que la courbe caractéristique de commande (90) associée au diagramme caractéristique (79) se situe dans la région du minimum de la perte à la séparation (84).

21. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** l'adaptation du diagramme caractéristique (79) respectif, en fonction du coefficient d'oscillation (83), provoque une adaptation (111) dynamique rapide du diagramme caractéristique (79) respectif, tandis que l'adaptation du diagramme caractéristique (79) respectif, en fonction de la perte à la séparation (84), provoque une adaptation (112) lente avec inertie du diagramme caractéristique (79) respectif.

22. Machine de récolte agricole (1) comprenant un système d'assistance au conducteur (69) et un outil frontal de récolte (3) réalisé sous forme de tablier de coupe à tapis (4) selon une des revendications précédentes, dans laquelle le système d'assistance au conducteur (69) est en outre conçu pour
a. déterminer des grandeurs de mesure (97) du tablier de coupe à tapis (4) et/ou de la machine de travail agricole (1)
b. déduire au moins des points de travail instantanés (95) des grandeurs de mesure (97) déterminées
c. convertir le point de travail instantané (95) en un point de travail quasi-stationnaire (103)
d. transmettre le point de travail quasi-stationnaire (95) à l'automate à tablier de coupe à tapis (78) respectif ou à un ou plusieurs sous-automates (80a..f)
e. transmettre, dans l'automate à tablier de coupe à tapis (78) ou le sous-automate (80a..f) respectifs, au diagramme caractéristique initial (93) qui y est enregistré ou au diagramme caractéristique (107) déjà mis à jour
f. remplacer, dans le diagramme caractéristique (93, 107) respectif, un point de travail initial (97) ou un point de travail déjà mis à jour, par un point de travail quasi-stationnaire (103)
g. calculer un diagramme caractéristique mis à jour (107), en tenant compte des points de travail quasi-stationnaires (103) insérés
h. déterminer la courbe caractéristique de commande (90) du diagramme caractéristique mis à jour (107)
i. déterminer des paramètres de travail optimisés (60') à l'aide de la courbe caractéristique de commande (90) mise à jour
k. prédéfinir le paramètre de travail optimisé (60') respectif pour l'unité de processus (59) respective.

23. Machine de récolte agricole (1) comprenant un système d'assistance au conducteur (69) et un outil frontal de récolte (3) réalisé sous forme de tablier de coupe à tapis (4) selon la revendication 22, **caractérisée en ce que** l'adaptation du diagramme caractéristique comprend une superposition d'une adaptation dynamique de diagramme caractéristique « coefficient d'oscillation » (111) et d'une adaptation lente de diagramme caractéristique « perte à la séparation » (112), l'adaptation dynamique de diagramme caractéristique (111) étant obtenue par le fait que le paramètre de qualité (82) du diagramme caractéristique (79) respectif est constitué du coefficient d'oscillation (83), et l'adaptation lente de diagramme caractéristique (112) étant obtenue par le fait que le paramètre de qualité (82) du diagramme caractéristique (79) respectif est constitué de le perte à la séparation (84).

24. Machine de récolte agricole (1) comprenant un système d'assistance au conducteur (69) et un outil frontal de récolte (3) réalisé sous forme de tablier de coupe à tapis (4) selon la revendication 22, **caractérisée en ce que** le système d'assistance au conducteur (69) vérifie au cours d'une étape de contrôle (113) si, concernant les paramètres de travail à optimiser (60'), des tendances opposées s'installent pour la valeur du paramètre de travail optimisé (60') respectif, en cas d'application de l'adaptation dynamique de diagramme caractéristique (111) et de l'adaptation lente de diagramme caractéristique (112).

25. Machine de récolte agricole (1) comprenant un système d'assistance au conducteur (69) et un outil frontal de récolte (3) réalisé sous forme de tablier de coupe à tapis (4) selon la revendication 24, **caractérisée en ce qu'**une fonction de coût décide quel point de travail (95, 103) résultant des courbes caractéristiques de commande (90) est visé, la fonction de coût comportant les paramètres débit/h, coefficient d'oscillation (83), pertes à la séparation (84), pertes du mécanisme de coupe, et ces paramètres pouvant faire l'objet de pondérations différentes.

26. Machine de récolte agricole (1) comprenant un système d'assistance au conducteur (69) et un outil frontal de récolte (3) réalisé sous forme de tablier de coupe à tapis (4) selon la revendication 22, **caractérisée en ce que** le système d'assistance au conducteur (69) prend en compte des connaissances spécialisées (114) lors de la génération des diagrammes caractéristiques (79, 93, 107) respectifs.

27. Machine de récolte agricole (1) comprenant un système d'assistance au conducteur (69) et un outil frontal de récolte (3) réalisé sous forme de tablier de coupe à tapis (4) selon une des revendications précédentes, **caractérisée en ce que** la barre porte-lames (41) et au moins les convoyeurs transversaux (43, 44) installés à sa suite sont réalisés de manière souple.
